# EUROPÄISCHE PATENTSCHRIFT

(11) **EP 4 003 848 B1**
(45) Veröffentlichungstag und Bekanntmachung des Hinweises auf die Patenterteilung: **23.04.2025**
(21) Anmeldenummer: 20764291.9
(22) Anmeldetag: 22.07.2020
(51) Int. Cl.: B65B 13/04, B65B 27/00, B65B 27/08, B65G 19/02, B65G 47/00

(54) **LAGER- UND KOMMISSIONIERSYSTEM UND VERFAHREN ZUM STAPELN VON WAREN UND SICHERN DES WARENSTAPELS MIT EINEM BAND**
STORAGE AND PICKING SYSTEM AND METHOD FOR STACKING GOODS AND SECURING THE STACK OF GOODS WITH A TAPE
SYSTÈME DE STOCKAGE ET DE PRÉLÈVEMENT ET PROCÉDÉ POUR EMPILER DES MARCHANDISES ET SÉCURISER LA PILE DE MARCHANDISES AVEC UNE BANDE

(30) Priorität: 22.07.2019 AT 506602019
(43) Veröffentlichungstag der Anmeldung: 01.06.2022
(73) Patentinhaber: TGW Logistics Group GmbH, 4614 Marchtrenk (AT)
(72) Erfinder: DESTRO, Raffaele, 20861 Brugherio (MB) (IT)
(74) Vertreter: Burger, Hannes
(86) Internationale Anmeldenummer: PCT/AT2020/060273
(87) Internationale Veröffentlichungsnummer: WO 2021/011978

(56) Entgegenhaltungen:
- EP-A1- 0 320 797
- DE-A1- 19 615 009

## Beschreibung

Die Erfindung betrifft ein Lager- und Kommissioniersystem mit einem Lagerbereich, zumindest einer Warenbündelungsvorrichtung und einer Versorgungs-Fördertechnik zwischen dem Lagerbereich und der zumindest einen Warenbündelungsvorrichtung, und ein Verfahren zum Stapeln von Waren und zum Sichern der gestapelten Waren mit einem um den Warenstapel gewickelten Band, wie im Anspruch 1 und 21 beschrieben.

Eine Warenbündelungsvorrichtung, ein Lager- und Kommissioniersystem und ein Verfahren sind grundsätzlich bekannt. In erster Linie werden Kleidungsstücke, beispielsweise in Kunststoffbeutel verschweißte Shirts, Hemden, Hosen und dergleichen gestapelt und mit einem Band beziehungsweise einer Banderole gesichert, um diese leichter transportierbar und handhabbar zu machen. Insbesondere können Waren eines Auftrags auf diese Weise zusammengefasst und für den Versand vorbereitet werden.

Problematisch ist dabei die Positionierung der zu stapelnden und zu sichernden Waren im Bereich der Banderoliermaschine. Insbesondere biegeschlaffe Waren neigen bei diesem Vorgang zum Verknüllen, was den Stapel einerseits unansehnlich macht, andererseits aber auch das Stapeln an sich und die weitere Handhabung und den weiteren Transport erschwert.

Die DE 196 15 009 A1 und EP 0 320 797 A1 offenbaren eine Bündelungsvorrichtung zum Stapeln von Druckerzeugnissen und zum Sichern des Stapels von Druckerzeugnissen mit einem Band.

Eine Aufgabe der Erfindung ist es, ein verbessertes Lager- und Kommissioniersystem und ein verbessertes Verfahren zum Stapeln von Waren und zum Sichern der gestapelten Waren anzugeben.

Die Aufgabe der Erfindung wird durch die Merkmale und Maßnahmen der Ansprüche 1 und 21 gelöst.

Erfindungsgemäß umfasst das Lager- und Kommissioniersystem eine Warenbündelungsvorrichtung, mit welcher die Positionierung der Waren im Bereich der Banderoliermaschine verbessert wird. Insbesondere gelingt dadurch auch eine Positionierung und Stapelung biegeschlaffer Waren im Bereich der Banderoliermaschine, konkret im Bereich der Bandführung, ohne dass diese verknüllen. Dadurch bleibt der Warenstapel einerseits ansehnlich, andererseits wird aber auch das Stapeln an sich und die weitere Handhabung und der weitere Transport erleichtert. Vor allem Kleidungsstücke, beispielsweise in Kunststoffbeutel verschweißte Shirts, Hemden, Hosen und dergleichen, können mit Hilfe der vorgeschlagenen Maßnahmen störungsfrei gestapelt und mit einem Band beziehungsweise einer Banderole gesichert werden, um diese beispielsweise für den Versand vorzubereiten.

Erfindungsgemäß umfasst das Lager- und Kommissioniersystem eine Versorgungs-Fördertechnik zwischen dem Lagerbereich und der zumindest einen Warenbündelungsvorrichtung und eine Verpackungsmaschine zum Verpacken des gesicherten Warenstapels in eine Versandpackung (z.B. Polybag, Karton). Die Waren werden über die Versorgungs-Fördertechnik mit Ladehilfsmitteln zur zumindest einen Warenbündelungsvorrichtung antransportiert. Die Verpackungsmaschine ist über eine Versand-Fördertechnik mit der zumindest einen Warenbündelungsvorrichtung verbunden. Die gesicherten Warenstapel werden über die Versand-Fördertechnik von der zumindest einen Warenbündelungsvorrichtung zu der Verpackungsmaschine antransportiert. Die Versand-Fördertechnik schließt an die zweite Fördertechnik der zumindest einen Warenbündelungsvorrichtung an. Auf diese Weise kann der mit einem Band beziehungsweise einer Banderole gesicherte Warenstapel versandfertig gemacht werden.

Weiterte vorteilhafte Ausgestaltungen und Weiterbildungen der Erfindung ergeben sich nun aus den Unteransprüchen sowie aus der Beschreibung in Zusammenschau mit den Figuren.

Beispielsweise kann die Bandführung gegenüber dem Banderolier-Ablageboden vorragende erste Rahmenteile und einen diese verbindenden zweiten Rahmenteil umfassen, wobei die Bandführungsebene zwischen den ersten Rahmenteilen und dem zweiten Rahmenteil aufgespannt ist und wobei die Bandführung an den ersten Rahmenteilen und dem zweiten Rahmenteil ausgebildet ist. Dadurch kann das Band beziehungsweise die Banderole gut um den Warenstapel geführt werden. Grundsätzlich ist auch die Anwendung eines geschlossenen Rahmens denkbar, das heißt die ersten Rahmenteile werden an ihrem oberen und unteren Ende durch jeweils einen zweiten Rahmenteil verbunden. Mit anderen Worten kann die Bandführung insbesondere rahmenförmig ausgebildet und ringförmig um den Warenstapel herumgeführt sein. Die Bandführung nimmt dann die Form eines geschlossenen Bandführungsrahmens an. Generell kann die Bandführungsebene auch durch das um den Warenstapel zu wickelnde Band begrenzt angesehen werden.

Günstig ist es, wenn der Banderolier-Ablageboden zu beiden Seiten der Bandführungsebene und einander gegenüberliegend angeordnete Ablagetische aufweist, welche von der ersten Fördertechnik und der zweiten Fördertechnik umfasst sind. Auf diese Weise können auch vergleichsweise lange Waren im Bereich der Banderoliermaschine positioniert beziehungsweise gestapelt werden.

Günstig ist es weiterhin, wenn der Banderolier-Ablageboden zu beiden Seiten der Bandführungsebene und einander gegenüberliegend angeordnete Banderolier-Fördervorrichtungen aufweist, welche von der ersten und zweiten Fördertechnik umfasst sind. Auf diese Weise können ebenfalls vergleichsweise lange Waren im Bereich der Banderoliermaschine positioniert beziehungsweise gestapelt werden. Eine zusätzliche Möglichkeit zur Positionierung ist durch die genannten Fördervorrichtungen verwirklicht. Mit diesen können Waren somit positioniert als auch in Folge abtransportiert werden. Darüber hinaus ist auch eine Kombination der Fördervorrichtungen mit Ablagetischen möglich. Beispielsweise können Ablagetische unmittelbar an die Bandführung angrenzen, wohingegen die Fördervorrichtungen etwas weiter außenliegend an die Ablagetische angrenzen.

Günstig ist es auch, wenn die erste Förderrichtung der Waren auf der ersten Fördertechnik der zweiten Förderrichtung des gesicherten Warenstapels auf der zweiten Fördertechnik entspricht. Dadurch werden die Waren in einer (einzigen) Hauptförderrichtung transportiert, wodurch der Aufbau der Warenbündelungsvorrichtung und insbesondere auch des Lager- und Kommissioniersystems mit der Warenbündelungsvorrichtung vereinfacht wird. Generell ist anzumerken, dass die Waren, obwohl sie in einer (einzigen) Hauptförderrichtung transportiert werden, sich innerhalb der Warenbündelungsvorrichtung lokal auch in eine andere Förderrichtung bewegen können (zum Beispiel vertikal nach unten). Innerhalb der Warenbündelungsvorrichtung kann es daher auch unterschiedlich orientierte, lokale Förderrichtungen geben. Die oben genannte Gleichheitsbedingung kann insbesondere auch auf eine von oben betrachtete Projektion der ersten und zweiten Förderrichtung auf eine Horizontalebene bezogen sein.

Vorteilhaft ist es zudem, wenn die Bandführungsebene gegenüber einer Vertikalen um einen ersten Neigungswinkel von der ersten Fördertechnik derart weggeneigt ist, dass eine obere Schnittgerade zwischen der Bandführungsebene und der Abgabeebene und eine untere Schnittgerade zwischen der Bandführungsebene und der Ablageebene mit einem Horizontalabstand angeordnet sind, wobei die untere Schnittgerade gegenüber der oberen Schnittgeraden (in der ersten Förderrichtung) rückversetzt ist. Mit anderen Worten ist die Bandführungsebene gegenüber einer Vertikalen mit ihrem oberen Ende in eine stromabwärts gelegene Richtung beziehungsweise von der ersten Fördertechnik weg geneigt. Noch anders gesagt ist die Bandführungsebene gegenüber einer ersten, quer zur ersten Förderrichtung ausgerichteten Vertikalebene mit ihrem oberen Ende in eine stromabwärts gelegene Richtung beziehungsweise von der ersten Fördertechnik weg geneigt. Die Bandführungsebene ist also so geneigt, dass sich ein zur ersten Fördertechnik weisender Öffnungswinkel zwischen der Bandführungsebene und dem Banderolier-Ablageboden gegenüber einer vertikalen Ausrichtung der Bandführungsebene weiter öffnet (vergrößert). Dadurch wird die Positionierung der zu stapelnden und zu sichernden Waren im Bereich der Banderoliermaschine weiter erleichtert. Der Vollständigkeit halber wird angemerkt, dass sich die angegebene Neigung der Bandführungsebene auf eine Arbeitsstellung oder Betriebsstellung der Banderoliermaschine beziehen kann. Wenn die Bandführungsebene starr ist, dann entspricht die Neigung derselben gleichzeitig der Arbeitsstellung. Denkbar wäre aber auch, dass die Banderolierebene von einer Arbeitsstellung in eine Ruhestellung bewegt (verschwenkt) werden kann, um beispielsweise den Zugang zu Bauteilen der Warenbündelungsvorrichtung zur erleichtern. In der Ruhestellung kann die Banderolierebene ebenfalls geneigt sein, insbesondere aber auch horizontal oder vertikal ausgerichtet sein. In der Arbeitsstellung ist die Bandführungsebene entsprechend dieser Ausführungsform jedenfalls geneigt. Insbesondere kann die Bandführungsebene im Betrieb hinsichtlich ihrer Neigung unveränderlich sein. Die Bandführungsebene kann also gänzlich starr sein, während des Betriebs unveränderlich (starr) sein, oder ihre Neigung auch im Betrieb verändern (sie nimmt im Betrieb entsprechend dieser Ausführungsform jedoch keine horizontale oder vertikale Stellung ein).

Günstig ist es darüber hinaus, wenn die untere Schnittgerade zwischen den ersten Rahmenteilen der Bandführung verläuft. Mit anderen Worten erstreckt sich die Bandführung vom Banderolier-Ablageboden nach oben. Dadurch ist die Bildung besonders hoher Warenstapel möglich.

Besonders vorteilhaft ist es weiterhin, wenn der Banderolier-Ablageboden (das heißt dessen Ablageebene) um einen zweiten Neigungswinkel gegenüber einer Horizontalebene derart geneigt ist, dass ein der ersten Fördertechnik benachbartes Ende höher liegt als ein der ersten Fördertechnik abgewandtes Ende. Mit anderen Worten ist der Banderolier-Ablageboden gegenüber einer Horizontalebene mit seinem stromabwärts gelegenen beziehungsweise mit seinem von der ersten Fördertechnik abgewandten Ende nach unten geneigt. Insbesondere kann der Banderolier-Ablageboden rechtwinkelig zur Bandführungsebene ausgerichtet sein. Auf diese Weise kann ein Rutschen der Waren in eine zum Stapeln vorgesehene Position unterstützt werden.

Besonders vorteilhaft ist es weiterhin, wenn die Abgabeebene um einen dritten Neigungswinkel gegenüber einer Horizontalebene derart geneigt ist, dass ein der Banderoliermaschine abgewandtes Ende höher liegt als ein der Banderoliermaschine benachbartes Ende. Mit anderen Worten ist die Abgabeebene gegenüber einer Horizontalebene mit ihrem stromabwärts gelegenen beziehungsweise mit ihrem der Banderoliermaschine zugewandten Ende nach unten geneigt. Insbesondere kann die Abgabeebene ebenfalls rechtwinkelig zur Bandführungsebene ausgerichtet sein. Auf diese Weise kann ein Rutschen der Waren in eine Abgabeposition unterstützt werden.

Günstig ist es darüber hinaus, wenn die Warenbündelungsvorrichtung einen im Bereich des Banderolier-Ablagebodens in der zweiten Förderrichtung der zweiten Fördertechnik nach der Bandführungsebene angeordneten Stapelanschlag aufweist, welcher durch wenigstens einen Antrieb zwischen einer aus dem Transportweg zurückgezogenen Freigabestellung und einer in den Transportweg vorragenden Stapelstellung bewegbar ist, wobei die zweite Fördertechnik den Transportweg ausbildet, entlang welchem der gesicherte Warenstapel transportiert wird. Dadurch können die sich im Bereich der Bandführungsebene bewegenden Waren gezielt gestoppt werden, wodurch der Stapelvorgang und das Sichern des Warenstapels mit einem Band vereinfacht wird. Insbesondere wird der Stapelanschlag vor dem Schritt b) in eine in den Transportweg der Waren vorragende Stapelstellung und vor dem Schritt d) in eine aus dem Transportweg zurückgezogene Freigabestellung bewegt.

Besonders vorteilhaft ist es in obigem Zusammenhang, wenn
- der Stapelanschlag rechtwinkelig zum Banderolier-Ablageboden ausgerichtet wird, wenn im Schritt b) auf dem Banderolier-Ablageboden im Wesentlichen gleich große Waren gestapelt werden, und/oder
- der Stapelanschlag schräg zum Banderolier-Ablageboden ausgerichtet wird, wenn im Schritt b) auf dem Banderolier-Ablageboden im Wesentlichen unterschiedlich große und entsprechend ihrer Größe sortierte Waren gestapelt werden, wobei größere Waren im Warenstapel weiter unten und kleinere Waren im Warenstapel weiter oben angeordnet werden.

Dadurch können Stapel gebildet werden, die in sich sehr stabil sind, auch dann, wenn die gestapelten Waren unterschiedlich groß sind. Der Stapel bleibt daher auch unter ungünstigen Bedingungen lange ansehnlich.

Besonders vorteilhaft ist es auch, wenn die Waren Waren mit einer niedrigeren Biegesteifigkeit und Waren mit einer höheren Biegesteifigkeit umfassen und wenn im Schritt b) die Waren (zumindest zum Teil) entsprechend ihrer Biegesteifigkeit auf den Warenstapel abgegeben werden, wobei die Waren mit höherer Biegesteifigkeit im Warenstapel unten angeordnet werden. Dies ist eine weitere Maßnahme zur Bildung in sich stabiler Stapel, auch dann, wenn die gestapelten Waren unterschiedliche Biegesteifigkeit aufweisen. Die Stapel bleiben daher auch unter ungünstigen Bedingungen lange ansehnlich.

Besonders vorteilhaft ist es zudem, wenn die Fördervorrichtung der ersten Fördertechnik eine Warenabgabevorrichtung mit einem Warenabgabevorrichtungs-Ablageboden und mit einer damit verschließbaren Warenabgabevorrichtungs-Bodenöffnung (insbesondere eine Falltür) umfasst, wobei eine vertikale Linie am stromabwärts gelegenen Ende der Warenabgabevorrichtungs-Bodenöffnung durch die Bandführungsebene führt, bevor sie auf den Banderolier-Ablageboden trifft.

Bei dieser Ausführungsvariante ist die Warenabgabevorrichtungs-Bodenöffnung also so positioniert, dass die genannte Linie durch die gegenüber der Vertikalen geneigten Bandführungsebene führt. Mit anderen Worten fallen die von der Warenabgabevorrichtung abgegebenen Waren vertikal durch die Bandführungsebene, (welche gegenüber der Vertikalen geneigt ist) bevor sie den Banderolier-Ablageboden erreichen. Dadurch können die Waren durch eine einfache Vertikalbewegung in eine für das Stapeln und Sichern günstige Position gebracht werden. Die Vorgänge in der Warenbündelungsvorrichtung sind daher besonders gut reproduzierbar. Auch in diesem Fall kann sich die Neigung der Bandführungsebene auf deren Arbeitsstellung oder Betriebsstellung beziehen. Das weiter oben Gesagte ist dann sinngemäß anzuwenden.

Günstig ist es auch, wenn der Warenabgabevorrichtungs-Ablageboden drehbar um eine Achse normal zum Warenabgabevorrichtungs-Ablageboden (insbesondere drehbar um eine Vertikalachse) an einem Rahmen der Warenbündelungsvorrichtung gelagert ist. Auf diese Weise kann eine Orientierung einer Ware um die genannte Achse geändert werden. Beispielsweise können Kleidungsstücke so gestapelt werden, dass jeweils ihre oberen Enden übereinander liegen oder so, dass jeweils ein oberes Ende eines Kleidungstück über einem unteren Ende eines anderen Kleidungstücks zu liegen kommt.

Besonders günstig ist es, wenn eine Kamera oberhalb des Warenabgabevorrichtungs-Ablagebodens angeordnet ist. Auf diese Weise kann die Orientierung der Waren im Warenabgabevorrichtungs-Ablageboden erfasst werden.

Günstig ist es, wenn der Warenabgabevorrichtungs-Ablageboden durch wenigstens einen Antrieb zwischen einer von der Warenabgabevorrichtungs-Bodenöffnung zurückgezogenen Freigabestellung und einer die Warenabgabevorrichtungs-Bodenöffnung verschließenden Aufnahmestellung bewegbar ist und der Warenabgabevorrichtungs-Ablageboden in der Aufnahmestellung die Abgabeebene definiert. Dadurch kann die Warenabgabevorrichtungs-Bodenöffnung bedarfsweise geöffnet und geschlossen werden. Beispielweise kann der Ablageboden Bodenteile umfassen, welche um quer zur Transportrichtung ausgerichtete Achsen gegenläufig schwenkbar sind. Durch die vorgeschlagenen Maßnahmen ist es insbesondere auch denkbar, mehrere Waren auf Warenabgabevorrichtungs-Ablageboden zu stapeln, die dann gemeinsam in den Bereich der Banderoliermaschine fallen gelassen werden. Selbstverständlich können die Waren aber auch einzeln auf den Banderolier-Ablageboden abgegeben werden. Durch die vorgeschlagenen Maßnahmen können die Vorgänge im Bereich der Banderoliermaschine gut von den Vorgängen auf der Fördertechnik zum Antransport der Waren entkoppelt werden.

In einer vorteilhaften Ausführungsform des vorgestellten Verfahrens umfassen die Schritte a) und b)
i) das Antransportieren zumindest einer Ware über eine von der ersten Fördertechnik umfassten Beschickungsfördervorrichtung, welche eine Rutsche oder eine angetriebene Fördervorrichtung aufweist, und das Abgeben der zumindest einen Ware auf einen Warenabgabevorrichtungs-Ablageboden einer Warenabgabevorrichtung, welche von der Fördervorrichtung der ersten Fördertechnik umfasst ist und sich in einer Aufnahmestellung befindet, wobei der Warenabgabevorrichtungs-Ablageboden
   - in eine die Warenabgabevorrichtungs-Bodenöffnung verschließende Aufnahmestellung bewegt wird, wenn eine Ware oder mehrere Waren auf dem Warenabgabevorrichtungs-Ablageboden aufgenommen werden soll(en), und
   - in eine von der Warenabgabevorrichtungs-Bodenöffnung zurückgezogene Freigabestellung bewegt wird, wenn eine Ware oder mehrere Waren von dem Warenabgabevorrichtungs-Ablageboden abgegeben werden soll(en),
ii) Bewegen des Warenabgabevorrichtungs-Ablagebodens in die zurückgezogene Freigabestellung, nachdem eine Ware oder mehrere Waren auf den Warenabgabevorrichtungs-Ablageboden abgegeben wurde(n), um diese Ware / Waren auf den Banderolier-Ablageboden fallenzulassen, und
iii) Wiederholen der Schritte i) und ii), sofern der auf dem Banderolier-Ablageboden gebildete Warenstapel unvollständig ist.

Dadurch können die Warenstapel besonders flexibel gebildet werden. Insbesondere können sowohl einzelne Waren als auch Waren(teil)stapel auf den Warenstapel auf dem Banderolier-Ablageboden abgegeben werden. Demgemäß können die Waren vereinzelt oder in Gruppen mit der ersten Fördertechnik angefördert und zu einem Warenstapel gestapelt werden.

Besonders günstig ist es weiterhin, wenn eine Ausrichtung der Ware auf dem Warenabgabevorrichtungs-Ablageboden zwischen den Schritten i) und ii) mit Hilfe einer über dem Warenabgabevorrichtungs-Ablageboden angeordneten Kamera ermittelt und durch Drehen des Warenabgabevorrichtungs-Ablagebodens um eine normal zum Warenabgabevorrichtungs-Ablageboden ausgerichtete Achse (insbesondere um eine Vertikalachse) korrigiert wird, wenn die ermittelte Ist-Orientierung der Ware nicht einer Soll-Orientierung der Ware entspricht. Durch die vorgeschlagenen Maßnahmen kann eine Orientierung einer Ware erfasst und gegebenenfalls geändert werden, sodass die Waren in Folge in gewünschter Weise gestapelt werden können. Beispielsweise können Kleidungsstücke wiederum so gestapelt werden, sodass jeweils ihre oberen Enden übereinander liegen oder so, dass jeweils ein oberes Ende eines Kleidungstück über einem unteren Ende eines anderen Kleidungstücks zu liegen kommt, und so weiter.

Günstig ist es weiterhin, wenn die erste Fördertechnik zusätzlich eine in der ersten Förderrichtung stromaufwärts zur Warenabgabevorrichtung angeordnete Beschickungsfördervorrichtung aufweist, welche eine Rutsche oder eine angetriebene Fördervorrichtung umfasst, deren stromabwärts gelegenes Ende zu dem in die Aufnahmestellung bewegten Warenabgabevorrichtungs-Ablageboden in Vertikalrichtung beabstandet und oberhalb von diesem angeordnet ist. Auf diese Weise können die Waren gut an dem stromabwärts gelegenen Ende der Warenabgabevorrichtung, insbesondere an dem stromabwärts gelegenen Ende des Warenabgabevorrichtungs-Ablagebodens ausgerichtet werden. Die Vorgänge in der Warenbündelungsvorrichtung sind daher besonders gut reproduzierbar.

Besonders vorteilhaft ist es auch, wenn
- die erste Fördertechnik eine Beschickungsfördervorrichtung aufweist, welche eine Rutsche oder eine angetriebene Fördervorrichtung umfasst,
- das stromabwärts gelegene Ende der Beschickungsfördervorrichtung sowohl vertikal als auch horizontal von der unteren Schnittgerade zwischen der Bandführungsebene und der Ablageebene beabstandet ist, und
- zumindest eine (insbesondere in einer zur ersten Förderrichtung parallelen Vertikalebene verlaufende) Parabel existiert, die vom stromabwärts gelegenen Ende der Beschickungsfördervorrichtung durch die Bandführungsebene hindurch auf den Banderolier-Ablageboden führt und deren Tangente im Anfangspunkt mit der Abgabeebene (entsprechend einer Förderebene) der Beschickungsfördervorrichtung übereinstimmt.

Demgemäß umfasst der Schritt a) des vorgestellten Verfahrens:
- das Antransportieren über eine von der ersten Fördertechnik umfassten Beschickungsfördervorrichtung, welche eine Rutsche oder eine angetriebene Fördervorrichtung umfasst, und
- das Abgeben der Ware mit einer Geschwindigkeit, welche eine Horizontalkomponente aufweist, wobei eine von der Ware beschriebene Wurfparabel durch die Bandführungsebene führt, bevor sie auf dem Banderolier-Ablageboden endet.

Bei dieser Ausführungsvariante fallen die zu stapelnden Waren also nicht in vertikaler Richtung nach unten, sondern bewegen sich entlang einer Wurfparabel, die vom stromabwärts gelegenen Ende der Beschickungsfördervorrichtung ausgeht und durch die Bandführungsebene hindurch führt, bevor sie auf dem Banderolier-Ablageboden endet. Durch die vorgeschlagenen Maßnahmen können die Waren wiederum in eine für das Stapeln und Sichern günstige Position gebracht werden. Die Vorgänge in der Warenbündelungsvorrichtung sind dabei auch bei dieser Ausführungsvariante gut reproduzierbar. Eine Warenabgabevorrichtung mit einem Warenabgabevorrichtungs-Ablageboden und mit einer damit verschließbaren Warenabgabevorrichtungs-Bodenöffnung ist dazu nicht notwendig. Wegen des vereinfachten Ablaufs können die Waren besonders schnell gestapelt werden.

In einer günstigen Ausführungsform der Warenbündelungsvorrichtung liegt
- der erste Neigungswinkel in einem Bereich von 15-40° (und insbesondere in einem Bereich von 20-30°), und/oder
- der zweite Neigungswinkel in einem Bereich von 15-40° (und insbesondere in einem Bereich von 20-30°), und/oder
- der dritte Neigungswinkel in einem Bereich von 15-40° (und insbesondere in einem Bereich von 20-30°).

Diese Winkel haben sich als besonders vorteilhaft herausgestellt, um Waren verknitterungsfrei oder mit geringer Tendenz zum Verknüllen zur Banderoliermaschine zu befördern beziehungsweise im Bereich der Banderoliermaschine zu positionieren.

Günstig ist es weiterhin, wenn
- die Beschickungsfördervorrichtung in einem Bereich von 30-50° (und insbesondere in einem Bereich von 35-45°) gegenüber einer Horizontalebene derart geneigt ist, dass ein der Banderoliermaschine abgewandtes Ende höher liegt als ein der Banderoliermaschine benachbartes Ende.

Mit anderen Worten ist die Beschickungsfördervorrichtung gegenüber einer Horizontalebene mit ihrem stromabwärts gelegenen beziehungsweise mit ihrem der Banderoliermaschine zugewandten Ende nach unten geneigt. Insbesondere kann die Beschickungsfördervorrichtung rechtwinkelig zur Bandführungsebene ausgerichtet sein. Auf diese Weise können die Waren gut an dem stromabwärts gelegenen Ende der Warenabgabevorrichtung, insbesondere an dem stromabwärts gelegenen Ende des Warenabgabevorrichtungs-Ablagebodens besonders gut reproduzierbar ausgerichtet werden.

Bei einer günstigen Ausführungsform des Lager- und Kommissioniersystems sind die Ladehilfsmittel durch Fördergutbehälter (insbesondere durch Transporttaschen) gebildet, und die Versorgungs-Fördertechnik umfasst eine Hängefördervorrichtung zum hängenden Transport der Fördergutbehälter und zumindest eine Entladestation zum Entladen der Fördergutbehälter, wobei die Entladestation stromaufwärts an die erste Fördertechnik der zumindest einen Warenbündelungsvorrichtung angeschlossen ist. Diese Art des Transportes eignet sich besonders gut für biegeschlaffe Waren wie zum Beispiel in Kunststofffolie verpackte Kleidungsstücke. In Kombination mit der vorgestellten Warenbündelungsvorrichtung ergibt sich ein besonders leistungsfähiges System zum Stapeln und Sichern von Waren.

Besonders günstig ist es in obigen Zusammenhang, wenn die Hängefördervorrichtung zum Antransport des Fördergutbehälters in die Entladestation und Abtransport des Fördergutbehälters aus der Entladestation durch eine Antriebsvorrichtung oder durch Schwerkraft bewegbare Transportträger umfasst, wobei der Fördergutbehälter über einen Hängeträger gelenkig mit dem Transportträger gekoppelt ist, wodurch der Hängeträger um eine im Wesentlichen parallel zur Hängefördervorrichtung verlaufende Achse relativ zum Transportträger schwenkbar ist. Dadurch können die Fördergutbehälter besonders rasch und gleichzeitig prozesssicher entleert werden.

In einer weiteren günstigen Ausführungsvariante umfasst das Lager- und Kommissioniersystem eine erste Warenbündelungsvorrichtung und eine zweite Warenbündelungsvorrichtung.

Bei der ersten Warenbündelungsvorrichtung umfasst die Fördervorrichtung der ersten Fördertechnik eine Warenabgabevorrichtung mit einem Warenabgabevorrichtungs-Ablageboden und einer damit verschließbaren Warenabgabevorrichtungs-Bodenöffnung, wobei eine vertikale Linie am stromabwärts gelegenen Ende der Warenabgabevorrichtungs-Bodenöffnung durch die Bandführungsebene führt, bevor sie auf den Banderolier-Ablageboden trifft.

Bei der zweiten Warenbündelungsvorrichtung umfasst die erste Fördertechnik eine Beschickungsfördervorrichtung, welche eine Rutsche oder eine angetriebene Fördervorrichtung aufweist, wobei das stromabwärts gelegene Ende der Beschickungsfördervorrichtung sowohl vertikal als auch horizontal von der unteren Schnittgerade zwischen der Bandführungsebene und der Ablageebene beabstandet ist und zumindest eine Parabel existiert, die vom stromabwärts gelegenen Ende der Beschickungsfördervorrichtung durch die Bandführungsebene hindurch auf den Banderolier-Ablageboden führt und deren Tangente im Anfangspunkt mit der Abgabeebene der Beschickungsfördervorrichtung übereinstimmt.

Vorteilhaft werden nun Waren mit niedrigerer Biegesteifigkeit in der ersten Warenbündelungsvorrichtung und Waren mit höherer Biegesteifigkeit in der zweiten Warenbündelungsvorrichtung gestapelt und gesichert. Dabei macht man sich den Vorteil zu Nutze, dass Waren mit höherer Biegesteifigkeit mit hoher Prozesssicherheit entlang einer Wurfparabel bewegt und daher schneller zu einem Stapel gebildet werden können. Waren mit niedrigerer Biegesteifigkeit, die nur mit geringer Prozesssicherheit entlang einer Wurfparabel bewegt werden könnten, werden dagegen lediglich vertikal nach unten fallen gelassen. Insgesamt ergibt sich dadurch eine besonders ökonomische Betriebsweise des vorgestellten Lager- und Kommissioniersystems.

Generell ist es von Vorteil, wenn vor dem Schritt b) eine Unterlage auf dem Banderolier-Ablageboden angeordnet wird, auf der die Waren gestapelt werden und die ebenfalls vom Band eingeschlossen wird. Auf diese Weise kann der Stapel stabilisiert werden. Die Unterlage kann beispielsweise aus Karton oder einem Kunststoff bestehen.

Günstig ist es auch, wenn nach dem Schritt b) ein Versanddokument (zum Beispiel ein Lieferschein und/oder eine Rechnung) auf dem Warenstapel angeordnet wird, um welches das Band ebenfalls herumgeführt wird. Dadurch sind Versanddokumente, auf welchen Daten über die Waren des Stapels angeführt sind, direkt Teil des Warenstapels. Die Zugehörigkeit eines Versanddokuments zu einem Warenstapel ist daher besonders intuitiv erfassbar.

An dieser Stelle wird angemerkt, dass sich die zur vorgestellten Warenbündelungsvorrichtung und zum vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein schematisch dargestelltes Lager- und Kommissioniersystem in Draufsicht;
- Fig. 2: eine erste beispielhafte Ausführung einer Warenbündelungsvorrichtung in Schrägansicht;
- Fig. 3: eine zweite beispielhafte Ausführung einer Warenbündelungsvorrichtung mit geschlossener Warenabgabevorrichtung und einer Ware auf der Beschickungsvorrichtung in Schrägansicht;
- Fig. 4: wie Fig. 3, jedoch mit der auf der geschlossenen Warenabgabevorrichtung liegenden Ware;
- Fig. 5: wie Fig. 3, jedoch mit der durch die geöffnete Warenabgabevorrichtung gefallenen und auf dem Banderolier-Ablageboden liegenden Ware;
- Fig. 6: wie Fig. 3, jedoch mit der bis zum Stapelanschlag gerutschten Ware;
- Fig. 7: wie Fig. 3, jedoch mit einem fertigen und mit einem Band gesicherten Warenstapel auf dem Banderolier-Ablageboden;
- Fig. 8: die Warenbündelungsvorrichtung aus den Fig. 3 bis 7 in Seitenansicht;
- Fig. 9: eine Entladestation in Vorderansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

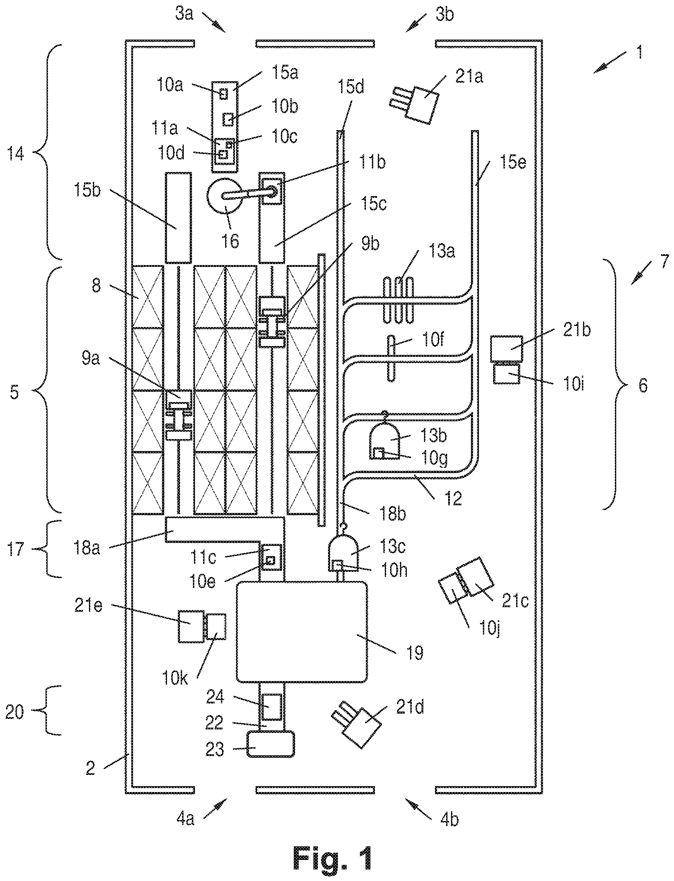

Fig. 1 zeigt ein beispielhaftes Lager- und Kommissioniersystem 1, welches ein Gebäude 2 umfasst, das Wareneingänge 3a und 3b sowie Warenausgänge 4a und 4b aufweist. Das Lager- und Kommissioniersystem 1 umfasst weiterhin einen ersten Lagerbereich 5 und einen zweiten Lagerbereich 6, welche gemeinsam Teil des Warenlagers 7 sind.

Der erste Lagerbereich 5 umfasst Lagerregale 8 sowie zwischen den Lagerregalen 8 verfahrende Regalbediengeräte 9a und 9b. In den Lagerregalen 8 können Waren 10a..10e direkt oder mithilfe von ersten Transportladehilfsmitteln 11a..11c gelagert sein. Die ersten Transportladehilfsmittel 11a..11c können dabei insbesondere als Tablare, Kartons oder Behälter mit festem Boden und Seitenwänden ausgeführt sein.

Der zweite Lagerbereich 6 umfasst Lager-Hängebahnen 12, auf denen Waren 10f..10h direkt oder mithilfe von zweiten Transportladehilfsmitteln 13a..13c, hier mit Hilfe von Hängetaschen 13a..13c, gelagert sein können. Werden die Waren 10f direkt auf den Lager-Hängebahnen 12 gelagert, so liegen die Waren 10f in Form von Hängewaren vor, also beispielsweise in Form von Kleidungsstücken, die auf Kleiderhaken hängen. Lagern die Waren 10g..10h in den Hängetaschen 13a..13c, so können diese praktisch in beliebiger Form vorliegen.

Das Lager- und Kommissioniersystem 1 umfasst weiterhin eine Einlagerfördertechnik 14, welche in diesem Beispiel einen ersten Einlager-Abschnitt 15a, einen zweiten Einlager-Abschnitt 15b und einen dritten Einlager-Abschnitt 15c aufweist. Der erste Einlager-Abschnitt 15a verbindet den Wareneingang 3a mit einem Umlageroboter 16. Der zweite Einlager-Abschnitt 15b und der dritte Einlager-Abschnitt 15c verbinden den Umlageroboter 16 mit den Regalbediengeräten 9a und 9b. Auf dem ersten Einlager-Abschnitt 15a werden zwei Waren 10a, 10b ohne erste Transportladehilfsmittel 11a..11c transportiert, zwei weitere Waren 10c, 10d mit einem ersten Transportladehilfsmittel 11a.

An jenem Ende der Regalgassen, welche der Einlagerfördertechnik 14 gegenüberliegt, ist eine Versorgungs-Fördertechnik beziehungsweise Auslagerfördertechnik 17 vorgesehen, die in diesem Beispiel einen ersten Auslager-Abschnitt 18a aufweist, welcher die Regalbediengeräte 9a und 9b fördertechnisch mit einer Warenbündelungsvorrichtung 19 verbindet.

Die Einlagerfördertechnik 14 umfasst weiterhin einen vierten Einlager-Abschnitt 15d und einen fünften Einlager-Abschnitt 15e, welche den Wareneingang 3b mit dem zweiten Lagerbereich 6 verbinden.

An jenem Ende des zweiten Lagerbereichs 6, welcher der Einlagerfördertechnik 14 gegenüberliegt, umfasst die Versorgungs-Fördertechnik 17 einen zweiten Auslagerabschnitt 18b, welcher die Lager-Hängebahnen 12 fördertechnisch mit der Warenbündelungsvorrichtung 19 verbindet.

Das Lager- und Kommissioniersystem 1 umfasst auch eine Versand-Fördertechnik 20, die im gezeigten Beispiel einen Versand-Abschnitt 22 umfasst, welcher die Warenbündelungsvorrichtung 19 mit einer Verpackungsmaschine 23 verbindet und auf dem ein Warenstapel 24 transportiert wird.

Schließlich weist das Lager- und Kommissioniersystem 1 einige autonome Flurförderfahrzeuge 21a..21e auf, welche
- Waren 10i.. 10k vom Wareneingang 4a zu den Regalbediengeräten 9a und 9b oder Waren 10i..10k vom Wareneingang 4b zum vierten Einlager-Abschnitt 15d oder fünften Einlager-Abschnitt 15e transportieren können und somit einen Teil der Einlagerfördertechnik 14 bilden, und/oder
- Waren 10i.. 10k von den Regalbediengeräten 9a und 9b zur Warenbündelungsvorrichtung 19 oder Waren 10i.. 10k vom zweiten Auslagerabschnitt 18b zur Warenbündelungsvorrichtung 19 transportieren können und somit einen Teil der Versorgungs-Fördertechnik 17 bilden, und/oder
- Waren 10i.. 10k vom Wareneingang 4a oder 4b zur Warenbündelungsvorrichtung 19 transportieren können und somit sowohl einen Teil der Einlagerfördertechnik 14, als auch der Versorgungs-Fördertechnik 17 bilden (Transport von Cross-Docking-Waren), und/oder
- Warenstapel 24 von der Warenbündelungsvorrichtung 19 zur Verpackungsmaschine 23 transportieren können und somit einen Teil der Versand-Fördertechnik 20 bilden.

Denkbar ist auch, dass das Lager- und Kommissioniersystem 1 eine in der Fig. 1 nicht dargestellte Umlagerfördertechnik zwischen dem ersten Lagerbereich 5 und dem zweiten Lagerbereich 6 umfasst, mit dem Waren 10a..10k zwischen den beiden Lagerbereichen 5 und 6 umgelagert werden können. Insbesondere können Waren 10a..10k von einem ersten Transportladehilfsmittel 11a..11c, beispielsweise einem Behälter, entnommen und in ein zweites Transportladehilfsmittel 13a..13c, bevorzugt eine Hängetasche, umgeladen werden, oder umgekehrt. Die Umlagerfördertechnik kann ortsfeste Fördertechnik und/oder autonome Flurförderfahrzeuge 21a..21e umfassen.

Die Funktion des in der Fig. 1 dargestellten Lager- und Kommissioniersystems 1 ist wie folgt:
An den Wareneingängen 3a und/oder 3b werden Waren 10a..10b angeliefert und in den ersten Lagerbereich 5 und/oder den zweiten Lagerbereich 6 eingelagert. Für die Einlagerung in den ersten Lagerbereich 5 werden die Waren 10a und 10b direkt auf den ersten Einlager-Abschnitt 15a der Einlagerfördertechnik 14 abgelegt, und/oder es werden Waren 10c und 10d mithilfe eines ersten Transportladehilfsmittels 11a auf den besagten ersten Einlager-Abschnitt 15a abgelegt. Die Waren 10a..10d werden in Folge zum Umlageroboter 16 transportiert und von diesem auf den zweiten Einlager-Abschnitt 15b oder den dritten Einlager-Abschnitt 15c abgelegt. In einem weiteren Schritt werden die Waren 10a..10d mithilfe der Einlagerfördertechnik 14 zu den Regalbediengeräten 9a und 9b transportiert und von Regalbediengeräten 9a und 9b in die Lagerregale 8 eingelagert.

Bei der Ausführung eines Auftrags zum Kommissionieren von Waren wird die zugeordnete Ware 10e mithilfe des Regalbediengeräts 9a oder 9b aus dem Lagerregal 8 ausgelagert, an den Auslager-Abschnitt 18a der Versorgungs-Fördertechnik 17 übergeben und auf dem Auslager-Abschnitt 18a zur Warenbündelungsvorrichtung 19 transportiert.

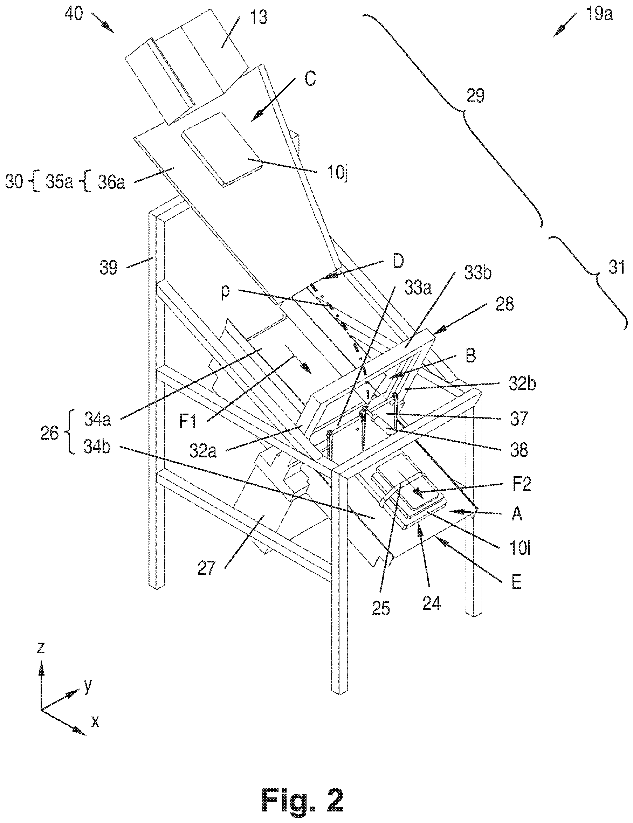

In der Warenbündelungsvorrichtung 19 wird die Ware 10e gestapelt und mit einem Band gesichert und in diesem Beispiel zu einer optionalen Verpackungsmaschine 23 transportiert. In Folge wird der beispielsweise in einen Kunststoffbeutel verpackte Warenstapel 24 zum Warenausgang 4a transportiert. Die Abläufe in der Warenbündelungsvorrichtung 19 sind in der Fig. 1 nicht im Detail dargestellt, sondern werden in den nachfolgenden Figuren 2 bis 8 im Detail erläutert.

Der Ablauf beim Einlagern, Lagern, Auslagern und Kommissionieren von Waren 10f..10h gestaltet sich in ähnlicher Weise wie beim Einlagern, Lagern, Auslagern und Kommissionieren von Waren 10a..10e.

Eine Ware 10f kann über den vierten Einlager-Abschnitt 15d oder den fünften Einlager-Abschnitt 15e auf eine der Lager-Hängebahnen 12 des zweiten Lagerbereichs 6 transportiert und dort gelagert werden. Die Ware 10f kann dabei direkt auf den Hängebahnen des vierten Einlager-Abschnitt 15d oder des fünften Einlager-Abschnitt 15e transportiert beziehungsweise auf der Lager-Hängebahnen 12 gelagert werden oder mithilfe eines zweiten Transportladehilfsmittels 13a..13c, so wie dies in der Fig. 1 für die Waren 10g und 10h dargestellt ist. Das zweite Transportladehilfsmittel 13a..13c ist in diesem Beispiel als Hängetasche ausgeführt.

An dieser Stelle wird angemerkt, dass die Hängetaschen 13b und 13c in der Fig. 1 der besseren Darstellbarkeit halber in die Zeichenebene gedreht wurden. In der Realität hängen die Hängetaschen 13b und 13c natürlich nach unten.

Bei der Ausführung eines Auftrags zum Kommissionieren von Waren wird die zugeordnete Ware 10h beziehungsweise die Hängetasche 13c über den zweiten Auslager-Abschnitt 18b der Versorgungs-Fördertechnik 17 zur Warenbündelungsvorrichtung 19 transportiert. In der Warenbündelungsvorrichtung 19 wird die Ware 10h gestapelt und mit einem Band gesichert und in diesem Beispiel auch zu einer optionalen Verpackungsmaschine 23 transportiert. In Folge wird der verpackte Warenstapel 24 wiederum zum Warenausgang 4a transportiert.

Der Transport der Waren 10a..10h kann, so wie dies oben beschrieben wurde, über ortsfeste Fördertechnik erfolgen oder aber auch mithilfe von autonomen Flurförderfahrzeugen 21a..21e, so wie dies in der Fig. 1 dargestellt ist. Beispielsweise kann eine Ware 10f..10h mithilfe eines Flurförderfahrzeugs 21a vom Wareneingang 3b zum vierten Einlager-Abschnitt 15d oder den fünften Einlager-Abschnitt 15e transportiert werden. Eine Ware 10k kann auch mithilfe eines autonomen Flurförderfahrzeugs 21e vom ersten Lagerbereich 5 oder vom zweiten Lagerbereich 6 zur Warenbündelungsvorrichtung 19 transportiert werden. Denkbar wäre auch das eine Ware 10i mit einem autonomen Flurförderfahrzeug 21b direkt vom Wareneingang 3a oder 3b zur Warenbündelungsvorrichtung 19 transportiert wird (Cross Docking-Ware). Schließlich ist auch vorstellbar, dass ein Warenstapel oder eine Versandverpackung von einem Flurförderfahrzeug 21d von der Warenbündelungsvorrichtung 19 zum Warenausgang 4a oder 4b transportiert wird. Die Waren 10i..10k können von den Flurförderfahrzeugen 21a..21e, wie oben angegeben, ohne erste Transportladehilfsmittel 11a..11c oder ohne zweite Transportladehilfsmittel 13a..13c transportiert werden oder aber auch mit ersten Transportladehilfsmitteln 11a..11c oder mit zweiten Transportladehilfsmitteln 13a..13c transportiert werden.

Das Lager- und Kommissioniersystem 1 umfasst somit einen Lagerbereich 5, 6 und eine Versorgungs-Fördertechnik 17 zwischen dem Lagerbereich 5, 6 und der zumindest einen Warenbündelungsvorrichtung 19, durch welche die Waren 10a..10p mit Ladehilfsmitteln 11a..11c, 13, 13a..13c zur zumindest einen Warenbündelungsvorrichtung 19 antransportiert werden können.

Fig. 2 zeigt eine beispielhafte Ausführung der Warenbündelungsvorrichtung 19a in detaillierter Ansicht. Diese Warenbündelungsvorrichtung 19a ist, so wie das in der Fig. 1 dargestellt ist, durch die Versorgungs-Fördertechnik 17 fördertechnisch mit dem Warenlager 7 verbunden, um den automatischen Transport der Waren 10a..10l vom Warenlager 7 zur Warenbündelungsvorrichtung 19a zu ermöglichen. Diese Warenbündelungsvorrichtung 19a ist auch durch die Versand-Fördertechnik 20 fördertechnisch mit der Verpackungsmaschine 23 verbunden, um den automatischen Transport der gestapelten Waren 10a..10l von der Warenbündelungsvorrichtung 19a zur Verpackungsmaschine 23 zu ermöglichen. Die Versand-Fördertechnik 20 ist vorzugsweise eine automatisiert betriebene Warenausgang-Fördertechnik. Diese umfasst beispielweise eine ortsfeste Fördertechnik und automatisiert betriebene Förderfahrzeuge. Alternativ kann die Versand-Fördertechnik 20 (teilweise oder ganz) auch eine manuell betriebene Warenausgang-Fördertechnik sein.

Die in Fig. 2 gezeigte Warenbündelungsvorrichtung 19a zum Stapeln von Waren 10a..10l und zum Sichern des Warenstapels 24 mit einem Band 25, umfasst im Detail einen Banderolier-Ablageboden 26, welcher eine Ablageebene A definiert und auf dem die Waren 10a..10l stapelbar sind, sowie eine automatische Banderoliermaschine 27 mit einer Bandführung 28, mit welcher das Band 25 um den Warenstapel 24 herum geführt wird und die eine Bandführungsebene B definiert, welche die Ablageebene A schneidet. Zudem umfasst die Warenbündelungsvorrichtung 19a eine in einer ersten Förderrichtung F1 vor der Banderoliermaschine 27 angeordnete erste Fördertechnik 29 zum Antransport der Waren 10a..10l, welche eine Fördervorrichtung 30 umfasst, die eine Abgabeebene C definiert und von welcher die Waren 10a..10l auf den Banderolier-Ablageboden 26 abgegeben werden, und eine in einer zweiten Förderrichtung F2 nach der Banderoliermaschine 27 angeordnete zweite Fördertechnik 31 zum Abtransport des gesicherten Warenstapels 24. Die Fördervorrichtung 30 der ersten Fördertechnik 31 ist mit ihrem in der erstem Förderrichtung F1 stromabwärts gelegenen Ende D vom Banderolier-Ablageboden 26 in Vertikalrichtung z beabstandet und oberhalb vom Banderolier-Ablageboden 26 angeordnet. Im Detail ist die Abgabeebene C der Fördervorrichtung 30 der ersten Fördertechnik 29 mit ihrem in der ersten Förderrichtung F1 stromabwärts gelegenen Ende D von der Ablageebene A des Banderolier-Ablagebodens 26 in Vertikalrichtung z beabstandet und oberhalb von der Ablageebene A des Banderolier-Ablagebodens 26 angeordnet. Konkret befindet sich in der Fig. 2 eine Ware 10j auf der Fördervorrichtung 30 der ersten Fördertechnik 29 und ein Warenstapel 24 mit mehreren Waren 10l auf dem Banderolier-Ablageboden 26.

Das vorgestellte Verfahren zum Stapeln der Waren 10a..10l und zum Sichern der gestapelten Waren 10a..10l mit einem um den Warenstapel 24 gewickelten Band 25 umfasst die Schritte
a) Antransportieren der Waren 10a..10l zur Bildung eines Warenstapels 24 mit der ersten Fördertechnik 29, welche in der ersten Förderrichtung F1 vor der Banderoliermaschine 27 angeordnet ist,
b) Stapeln dieser Waren 10a..10l zu einem Warenstapel 24 auf der Ablageebene A des Banderolier-Ablagebodens 26,
c) Anbringen des Bands 25 um diesen Warenstapel 24 mit der Banderoliermaschine 27, und
d) Abtransportieren des mit dem Band 25 gesicherten Warenstapels 24 über die in der zweiten Förderrichtung F2 nach der Banderoliermaschine 27 angeordnete zweite Fördertechnik 31.

Eine von der Fördervorrichtung 30 der ersten Fördertechnik 31 abgegebene Ware 10a..10l bewegt sich dabei zumindest abschnittsweise ohne Unterstützung von unten (das heißt unterstützungsfrei) zum Banderolier-Ablageboden 26, wobei die Bewegung eine nach unten weisende Vertikalkomponente aufweist.

In dem in Fig. 2 dargestellten Beispiel umfasst die Bandführung 28 gegenüber dem Banderolier-Ablageboden 26 vorragende erste Rahmenteile 32a, 32b und einen diese (an ihren unteren Enden) verbindenden zweiten Rahmenteil 33a. Die Bandführungsebene B ist zwischen den ersten Rahmenteilen 32a, 32b und dem zweiten Rahmenteil 33a aufgespannt, und die Bandführung 28 ist an den ersten Rahmenteilen 32a, 32b und dem zweiten Rahmenteil 33a ausgebildet.

In diesem Beispiel werden die ersten Rahmenteile 32a, 32b an ihren oberen Enden zusätzlich durch einen weiteren optionalen zweiten Rahmenteil 33b verbunden. Mit anderen Worten ist die Bandführung 28 in diesem Beispiel als geschlossener Rahmen ausgebildet und ringförmig um den Warenstapel 24 herumgeführt. Die Bandführung 28 nimmt dann die Form eines geschlossener Bandführungsrahmens an. Grundsätzlich kann der obere zweite Rahmenteil 33b aber auch fehlen. Die Bandführung 28 ist dann als offener Rahmen ausgebildet.

Mit Hilfe der Bandführung 28 wird das Band 25 um den Warenstapel 24 herum geführt. Generell kann die Bandführungsebene B durch das um den Warenstapel 24 zu wickelnde Band 25 begrenzt angesehen werden.

In dem in Fig. 2 dargestellten Beispiel weist der Banderolier-Ablageboden 26 zu beiden Seiten der Bandführungsebene B und einander gegenüberliegend angeordnete Ablagetische 34a, 34b auf, welche von der ersten Fördertechnik 29 und der zweiten Fördertechnik 31 umfasst sind. Auf diese Weise können auch vergleichsweise lange Waren 10a..10l im Bereich der Banderoliermaschine 27 positioniert beziehungsweise gestapelt werden.

Denkbar wäre auch, dass der Banderolier-Ablageboden 26 alternativ oder zusätzlich zu den Ablagetischen 34a, 34b zu beiden Seiten der Bandführungsebene B und einander gegenüberliegend angeordnete Banderolier-Fördervorrichtungen aufweist, welche von der ersten Fördertechnik 29 und der zweiten Fördertechnik 31 umfasst sind. Beispielsweise können Ablagetische 34a, 34b unmittelbar an die Bandführung 28 angrenzen, wohingegen die Banderolier-Fördervorrichtungen etwas weiter außenliegend an die Ablagetische 34a, 34b angrenzen. Durch die Banderolier-Fördervorrichtungen wird eine zusätzliche Möglichkeit zur Positionierung und zum Abtransport der Waren 10a..10l verwirklicht.

In dem in Fig. 2 gezeigten Beispiel entspricht die erste Förderrichtung F1 der Waren 10a..10l auf der ersten Fördertechnik 29 der zweiten Förderrichtung F2 des gesicherten Warenstapels 24 auf der zweiten Fördertechnik 31. Dadurch werden die Waren 10a..10l in einer (einzigen) Hauptförderrichtung transportiert, wodurch der Aufbau der Warenbündelungsvorrichtung 19a und insbesondere auch des Lager- und Kommissioniersystems 1 vereinfacht wird. Denkbar wäre natürlich auch, dass die erste Förderrichtung F1 der Waren 10a..10l auf der ersten Fördertechnik 29 der zweiten Förderrichtung F2 des gesicherten Warenstapels 24 auf der zweiten Fördertechnik 31 unterschiedlich sind. Beispielsweise können diese zueinander einen Winkel von 90° oder 180° einschließen.

Generell ist anzumerken, dass sich die Waren 10a..10l, obwohl sie in einer (einzigen) Hauptförderrichtung transportiert werden, innerhalb der Warenbündelungsvorrichtung 19a lokal auch in eine andere Förderrichtung bewegen können. Innerhalb der Warenbündelungsvorrichtung 19a gibt es daher auch unterschiedlich orientierte, lokale Förderrichtungen.

Vorteilhaft ist es, wenn die Bandführungsebene B gegenüber einer Vertikalen z mit ihrem oberen Ende in eine stromabwärts gelegene Richtung beziehungsweise von der ersten Fördertechnik 29 weg geneigt ist, so wie das in der Fig. 2 der Fall ist. Dadurch wird die Positionierung der zu stapelnden und zu sichernden Waren 10a..10l im Bereich der Banderoliermaschine 27 weiter erleichtert.

Vorteilhaft ist es weiterhin, wenn der Banderolier-Ablageboden 26 gegenüber einer Horizontalebene x/y mit seinem stromabwärts gelegenen beziehungsweise mit seinem von der ersten Fördertechnik 29 abgewandten Ende E nach unten geneigt. Insbesondere kann der Banderolier-Ablageboden 26 rechtwinkelig zur Bandführungsebene B ausgerichtet sein. Auf diese Weise kann ein Rutschen der Waren 10a..10l in eine zum Stapeln vorgesehene Position unterstützt werden.

Vorteilhaft ist es darüber hinaus, wenn die Abgabeebene C gegenüber einer Horizontalebene x/y mit ihrem stromabwärts gelegenen beziehungsweise mit ihrem der Banderoliermaschine 27 zugewandten Ende D nach unten geneigt. Insbesondere kann die Abgabeebene C rechtwinkelig zur Bandführungsebene B ausgerichtet sein. Auf diese Weise kann ein Rutschen der Waren 10a..10l in eine zum Stapeln vorgesehene Position ebenfalls unterstützt werden.

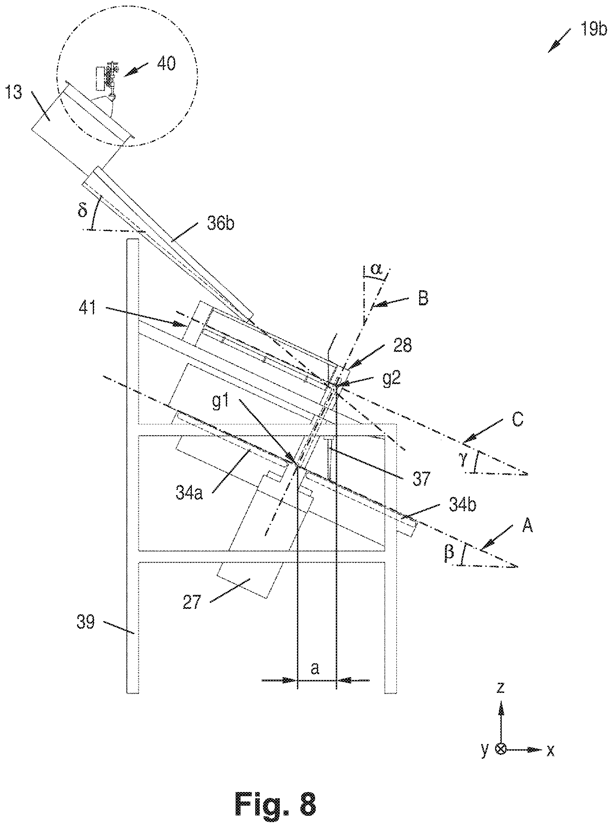

An dieser Stelle wird angemerkt, dass detailliertere Angaben zur Neigung der Ablageebene A, der Bandführungsebene B und der Abgabeebene C im Zusammenhang mit der Fig. 8 offenbart werden.

Günstig ist es darüber hinaus, wenn die Warenbündelungsvorrichtung 19a einen im Bereich des Banderolier-Ablagebodens 26 in der zweiten Förderrichtung F2 der zweiten Fördertechnik 31 nach der Bandführungsebene B angeordneten Stapelanschlag 37 aufweist, so wie das in dem in Fig. 2 dargestellten Beispiel der Fall ist.

Der Stapelanschlag 37 ist durch einen Antrieb 38, welcher hier beispielhaft als Pneumatik- oder Hydraulikzylinder ausgebildet ist, zwischen einer aus dem Transportweg zurückgezogenen Freigabestellung und einer in den Transportweg vorragenden Stapelstellung bewegbar, wobei die zweite Fördertechnik 31 den Transportweg ausbildet, entlang welchem der gesicherte Warenstapel 24 transportiert wird. Insbesondere wird der Stapelanschlag 37 vor dem Schritt b) in eine in den Transportweg der Waren 10a..10l vorragende Stapelstellung und vor dem Schritt d) in eine aus dem Transportweg zurückgezogene Freigabestellung bewegt. Dadurch können die sich im Bereich der Bandführungsebene B bewegenden Waren 10a..10l gezielt gestoppt werden, wodurch der Stapelvorgang und das Sichern des Warenstapels 24 mit einem Band 25 vereinfacht wird.

Besonders vorteilhaft ist es in obigem Zusammenhang, wenn
- der Stapelanschlag 37 rechtwinkelig zum Banderolier-Ablageboden 26 ausgerichtet wird, wenn im Schritt b) auf dem Banderolier-Ablageboden 26 im Wesentlichen gleich große Waren 10a..10l gestapelt werden, und/oder
- der Stapelanschlag 37 schräg zum Banderolier-Ablageboden 26 ausgerichtet wird, wenn im Schritt b) auf dem Banderolier-Ablageboden 26 im Wesentlichen unterschiedlich große und entsprechend ihrer Größe sortierte Waren 10a..10l gestapelt werden, wobei größere Waren 10a..10l im Warenstapel 24 weiter unten und kleinerer Waren 10a..10l im Warenstapel 24 weiter oben angeordnet werden.

Dadurch können Warenstapel 24 gebildet werden, die in sich sehr stabil sind, auch dann, wenn die gestapelten Waren 10a..10l unterschiedlich groß sind. Der Warenstapel 24 bleibt daher auch unter ungünstigen Bedingungen lange ansehnlich.

Die zur der Warenbündelungsvorrichtung 19a oben genannten Baugruppen sind an einem Rahmen 39 montiert. Dies ist aber nur eine von mehreren Möglichkeiten, und die genannten Baugruppen könnten auch auf andere Weise zusammengebaut sein.

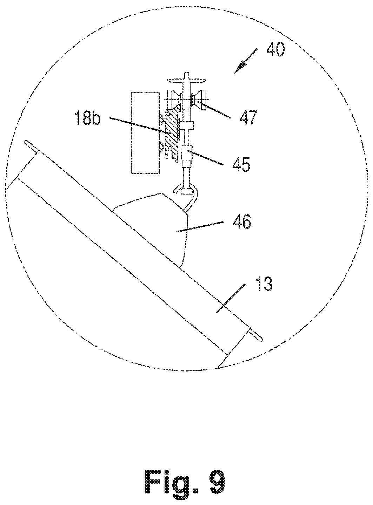

Die Ladehilfsmittel sind in dem in Fig. 2 dargestellten Beispiel durch Fördergutbehälter, hier konkret durch Transporttaschen beziehungsweise Hängetaschen 13, 13a..13c gebildet. Die Versorgungs-Fördertechnik 17 ist nicht nur zum hängenden Transport der Fördergutbehälter 13, 13a..13c ausgebildet, sondern umfasst auch eine Entladestation 40 zum Entladen der Fördergutbehälter 13, 13a..13c. Die Entladestation 40 ist dabei stromaufwärts an die erste Fördertechnik 29 der zumindest einen Warenbündelungsvorrichtung 19a angeschlossen. Eine detaillierte Beschreibung der Entladestation 40 wird später im Zusammenhang mit der Fig. 9 angegeben.

Es ist vorgesehen, dass die Abgabeebene C der Fördervorrichtung 30 der ersten Fördertechnik 29 mit ihrem in der ersten Förderrichtung F1 stromabwärts gelegenen Ende D von der Ablageebene A des Banderolier-Ablagebodens 26 in Vertikalrichtung z beabstandet und oberhalb von der Ablageebene A des Banderolier-Ablagebodens 26 angeordnet ist.

Konkret weist die erste Fördertechnik 29 in dem in Fig. 2 dargestellten Beispiel eine Beschickungsfördervorrichtung 35a auf, welche eine Rutsche 36a umfasst, deren stromabwärts gelegenes Ende D sowohl vertikal als auch horizontal von der unteren Schnittgerade g1 zwischen der Ablageebene A und der Bandführungsebene B beabstandet ist.

Es existiert zumindest eine Parabel p, welche insbesondere in einer zur ersten Förderrichtung F1 parallelen Vertikalebene x/z verläuft und die vom stromabwärts gelegenen Ende der Beschickungsfördervorrichtung 35a durch die Bandführungsebene B hindurch auf den Banderolier-Ablageboden 26 führt und deren Tangente im Anfangspunkt mit der Abgabeebene C der Beschickungsfördervorrichtung 35a übereinstimmt.

Demgemäß umfasst der Schritt a) des vorgestellten Verfahrens:
- das Antransportieren über die von der ersten Fördertechnik 29 umfassten Beschickungsfördervorrichtung 35a, welche in diesem Beispiel eine Rutsche 36a aufweist, und
- das Abgeben der Ware mit einer Geschwindigkeit, welche eine Horizontalkomponente aufweist, wobei eine von der Ware 10a..10l beschriebene Wurfparabel p durch die Bandführungsebene B führt, bevor sie auf dem Banderolier-Ablageboden 26 endet.

Bei dieser Ausführungsvariante bewegen sich die Waren 10a..10l also entlang einer Wurfparabel p, die vom stromabwärts gelegenen Ende der Beschickungsfördervorrichtung 35a ausgeht und durch die Bandführungsebene B hindurch führt, bevor sie auf dem Banderolier-Ablageboden 26 endet. Durch die vorgeschlagenen Maßnahmen können die Waren 10a..10l in eine für das Stapeln und Sichern günstige Position gebracht werden.

Anstelle einer Rutsche 36a kann generell auch eine angetriebene Fördervorrichtung, beispielsweise ein Rollenförderer oder ein Förderband, vorgesehen sein, wodurch die Anfangsgeschwindigkeit der Ware 10a..10l noch besser vorherbestimmbar ist.

Die Bewegung der Ware 10a..10l entlang einer Parabel p ist aber nicht die einzig vorstellbare Möglichkeit zur Umsetzung der erfindungsgemäß vorgeschlagenen Maßnahmen.

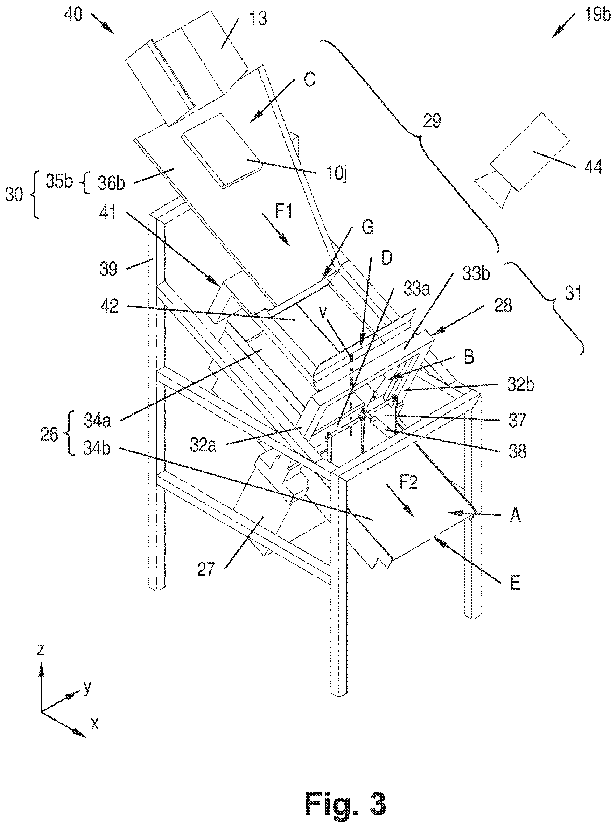

Denkbar ist vielmehr auch, dass die Fördervorrichtung 30 der ersten Fördertechnik 29 eine Warenabgabevorrichtung 41 mit einem Warenabgabevorrichtungs-Ablageboden 42 und mit einer damit verschließbaren Warenabgabevorrichtungs-Bodenöffnung 43 umfasst, wobei eine vertikale Linie v am stromabwärts gelegenen Ende D der Warenabgabevorrichtungs-Bodenöffnung 43 durch die Bandführungsebene B führt, bevor sie auf den Banderolier-Ablageboden 26 trifft, so wie das bei dem in den Fig. 3 bis 8 dargestellten Beispiel einer Warenbündelungsvorrichtung 19b der Fall ist. Bei dieser Ausführungsvariante ist die Warenabgabevorrichtungs-Bodenöffnung 43 also so positioniert, dass die genannte vertikale Linie v durch die gegenüber der Vertikalen z geneigten Bandführungsebene B führt.

Mit anderen Worten fallen die von der Warenbündelungsvorrichtung 19b abgegebenen Waren 10a..10l vertikal durch die geneigte Bandführungsebene B, bevor sie den Banderolier-Ablageboden 26 erreichen. Dadurch können die Waren 10a..10l durch eine einfache Vertikalbewegung in eine für das Stapeln und Sichern günstige Position gebracht werden. Die Vorgänge in der Warenbündelungsvorrichtung 19b sind daher besonders gut reproduzierbar.

Der Warenabgabevorrichtungs-Ablageboden 42 ist in dem in Fig. 3 bis 8 dargestellten Beispiel durch wenigstens einen Antrieb zwischen einer von der Warenabgabevorrichtungs-Bodenöffnung 43 zurückgezogenen Freigabestellung und einer die Warenabgabevorrichtungs-Bodenöffnung 43 verschließenden Aufnahmestellung bewegbar. In der Aufnahmestellung definiert der Warenabgabevorrichtungs-Ablageboden 42 die Abgabeebene C. Mit Hilfe des Antriebs kann die Warenabgabevorrichtungs-Bodenöffnung 43 bedarfsweise geöffnet und geschlossen werden.

Durch die vorgeschlagenen Maßnahmen ist es insbesondere auch denkbar, mehrere Waren 10a..10l auf dem Warenabgabevorrichtungs-Ablageboden 42 zu stapeln, die dann gemeinsam in den Bereich der Banderoliermaschine 27 fallen gelassen werden. Selbstverständlich können die Waren 10a..10l aber auch einzeln auf den Banderolier-Ablageboden 26 abgegeben werden. Durch die vorgeschlagenen Maßnahmen können die Vorgänge im Bereich der Banderoliermaschine 27 gut von den Vorgängen auf der Fördertechnik zum Antransport der Waren 10a..10l entkoppelt werden.

Der Warenabgabevorrichtungs-Ablageboden 42 kann beispielsweise als Falltür ausgebildet sein, so wie das in den Fig. 3 bis 8 dargestellten Beispiel der Fall ist, grundsätzlich ist aber auch eine andere Bauform denkbar, beispielsweise eine Ausbildung des Warenabgabevorrichtungs-Ablageboden 42 als Rollo-Boden.

Günstig ist es, wenn eine Kamera 44 oberhalb des Warenabgabevorrichtungs-Ablagebodens 42 angeordnet ist. Auf diese Weise kann die Orientierung der Waren 10a..10l im Warenabgabevorrichtungs-Ablageboden 42 erfasst werden.

Günstig ist es auch, wenn der Warenabgabevorrichtungs-Ablageboden 42 drehbar um eine Achse normal zum Warenabgabevorrichtungs-Ablageboden 42, insbesondere drehbar um eine Vertikalachse z, am Rahmen 39 der Warenbündelungsvorrichtung 19b gelagert ist. Auf diese Weise kann eine Orientierung einer Ware 10a..10l um die genannte Achse geändert werden. Beispielsweise können Kleidungsstücke so gestapelt werden, sodass jeweils ihre oberen Enden übereinander liegen oder so, dass jeweils ein oberes Ende eines Kleidungstücks über einem unteren Ende eines anderen Kleidungstücks zu liegen kommt.

In dem in den Fig. 3 bis 8 dargestellten Beispiel weist die erste Fördertechnik 29 eine in der ersten Förderrichtung F1 stromaufwärts zur Warenabgabevorrichtung 41 angeordnete Beschickungsfördervorrichtung 35b auf, welche in diesem Beispiel eine Rutsche 36b umfasst, deren stromabwärts gelegenes Ende G zu dem in die Aufnahmestellung bewegten Warenabgabevorrichtungs-Ablageboden 42 in Vertikalrichtung beabstandet und oberhalb von diesem angeordnet ist. Auf diese Weise können die Waren 10a..10l gut an dem stromabwärts gelegenen Ende D der Warenabgabevorrichtung 41 (insbesondere an dem stromabwärts gelegenen Ende D des Warenabgabevorrichtungs-Ablagebodens 42 ausgerichtet werden. Die Vorgänge in der Warenbündelungsvorrichtung 19b sind daher besonders gut reproduzierbar.

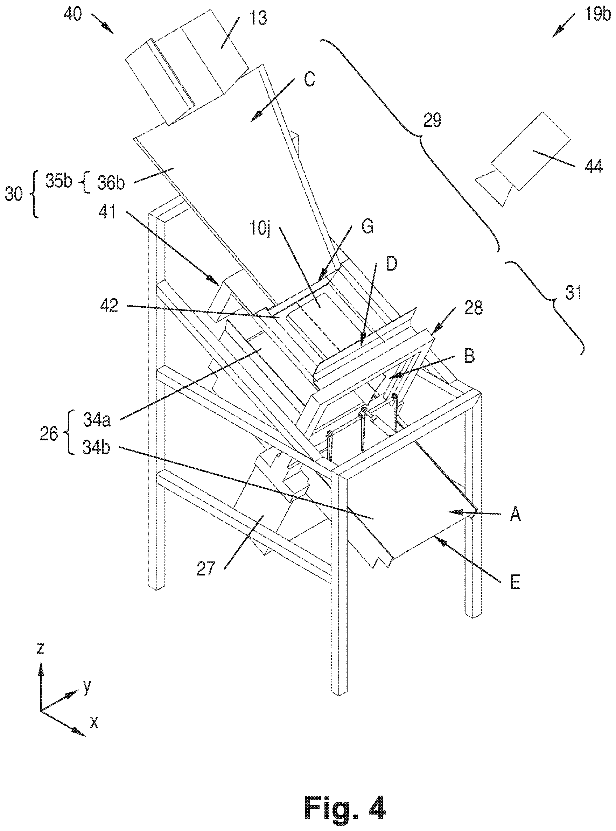

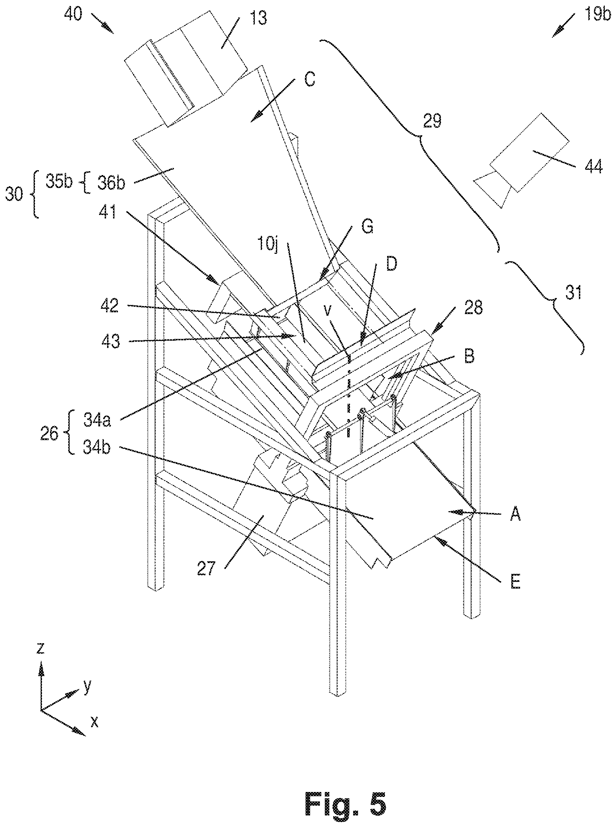

Die Fig. 3 zeigt die Warenbündelungsvorrichtung 19b in einem Zustand, in dem sich die Ware 10j auf der Rutsche 36b befindet und sich auf dem geschlossenen Warenabgabevorrichtungs-Ablageboden 42 beziehungsweise die geschlossene Warenabgabevorrichtungs-Bodenöffnung 43 hinbewegt. Die Fig. 4 zeigt die Warenbündelungsvorrichtung 19b in einem Zustand, in dem die Ware 10j den geschlossenen Warenabgabevorrichtungs-Ablageboden 42 beziehungsweise die geschlossene Warenabgabevorrichtungs-Bodenöffnung 43 erreicht hat und auf diesem zu liegen gekommen ist. Die Fig. 5 zeigt die Warenbündelungsvorrichtung 19b in einem Zustand, in dem der Warenabgabevorrichtungs-Ablageboden 42 geöffnet wurde und die Ware 10j durch die Warenabgabevorrichtungs-Bodenöffnung 43 hindurch auf den Banderolier-Ablageboden 26 gefallen ist.

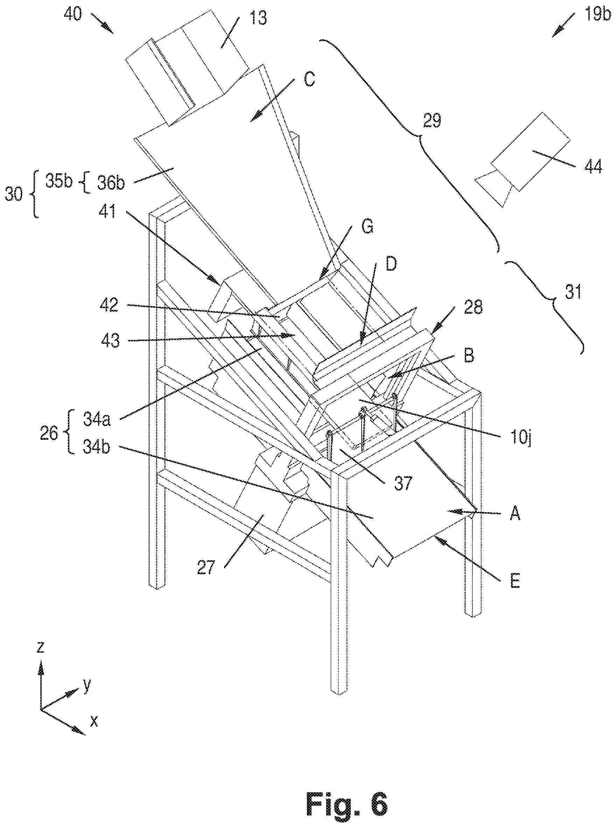

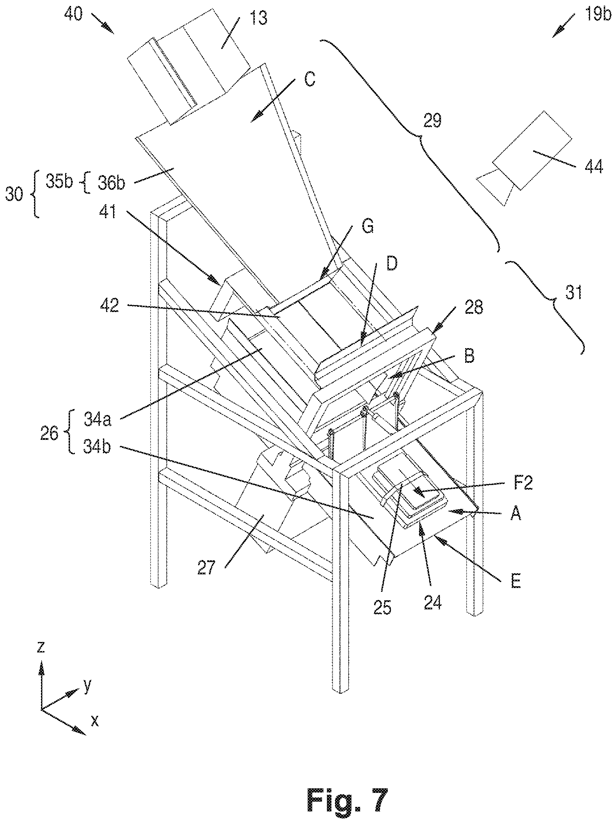

Die Fig. 6 zeigt die Warenbündelungsvorrichtung 19b in einem Zustand, in dem die Ware 10j auf dem Banderolier-Ablageboden 26 bis zum Stapelanschlag 37 gerutscht ist. Die Fig. 7 zeigt die Warenbündelungsvorrichtung 19b schließlich in einem Zustand, in dem mehrere Waren 10j zu einem Warenstapel 24 gestapelt und mit einem Band 25 gesichert wurden, wobei sich der Warenstapel 24 auf der zweiten Fördertechnik 32 befindet.

In einer vorteilhaften Ausführungsform des vorgestellten Verfahrens umfassen die Schritte a) und b)
i) das Antransportieren zumindest einer Ware 10a..10l über eine von der ersten Fördertechnik 29 umfassten Beschickungsfördervorrichtung 35b, welche in diesem Beispiel eine Rutsche 36b aufweist, und das Abgeben der zumindest einen Ware 10a..10l auf den Warenabgabevorrichtungs-Ablageboden 42 der Warenabgabevorrichtung 41 (siehe die Fig. 3 und 4), welche sich in der Aufnahmestellung befindet, wobei der Warenabgabevorrichtungs-Ablageboden 42
   - in eine die Warenabgabevorrichtungs-Bodenöffnung 43 verschließende Aufnahmestellung bewegt wird, wenn eine Ware 10a..10l oder mehrere Waren 10a..10l auf dem Warenabgabevorrichtungs-Ablageboden 42 aufgenommen werden soll(en), und
   - in eine von der Warenabgabevorrichtungs-Bodenöffnung 43 zurückgezogene Freigabestellung bewegt wird, wenn eine Ware 10a..10l oder mehrere Waren 10a..10l von dem Warenabgabevorrichtungs-Ablageboden 42 abgegeben werden soll(en),
ii) Bewegen des Warenabgabevorrichtungs-Ablagebodens 42 in die zurückgezogene Freigabestellung, nachdem eine Ware 10a..10l oder mehrere Waren 10a..10l auf den Warenabgabevorrichtungs-Ablageboden 42 abgegeben wurde(n), um diese Ware / Waren 10a..10l auf den Banderolier-Ablageboden 26 fallenzulassen (siehe die Fig. 5), und
iii) Wiederholen der Schritte i) und ii), sofern der auf dem Banderolier-Ablageboden 26 gebildete Warenstapel 24 unvollständig ist.

Dadurch kann der Warenstapel 24 besonders flexibel gebildet werden. Insbesondere können sowohl einzelne Waren 10a..10l als auch ein Waren(teil)stapel auf den Warenstapel 24 auf dem Banderolier-Ablageboden 26 abgegeben werden. Demgemäß können die Waren 10a..10l vereinzelt oder in Gruppen mit der ersten Fördertechnik 29 angefördert und zu einem Warenstapel 24 gestapelt werden.

Besonders günstig ist es weiterhin, wenn eine Ausrichtung der Ware 10a..10l auf dem Warenabgabevorrichtungs-Ablageboden 42 zwischen den Schritten i) und ii) mit Hilfe der über dem Warenabgabevorrichtungs-Ablageboden 42 angeordneten Kamera 44 ermittelt und durch Drehen des Warenabgabevorrichtungs-Ablagebodens 42 um die normal zum Warenabgabevorrichtungs-Ablageboden 42 ausgerichtete Achse (insbesondere um die Vertikalachse z) korrigiert wird, wenn die ermittelte Ist-Orientierung der Ware 10a..10l nicht einer Soll-Orientierung der Ware 10a..10l entspricht. Durch die vorgeschlagenen Maßnahmen kann eine Orientierung einer Ware 10a..10l erfasst und gegebenenfalls geändert werden, sodass die Waren 10a..10l in Folge in gewünschter Weise gestapelt werden können. Beispielsweise können Kleidungsstücke wiederum so gestapelt werden, sodass jeweils ihre oberen Enden übereinander liegen oder so, dass jeweils ein oberes Ende eines Kleidungstück über einem unteren Ende eines anderen Kleidungstücks zu liegen kommt, und so weiter.

In dem in Fig. 3 bis 8 dargestellten Beispiel weist die Beschickungsfördervorrichtung 35b eine Rutsche 36b auf. Anstelle einer Rutsche 36b kann generell auch eine angetriebene Fördervorrichtung, beispielsweise ein Rollenförderer oder ein Förderband, vorgesehen sein, wodurch die Anfangsgeschwindigkeit der Ware 10a..10l noch besser vorherbestimmbar ist.

Fig. 8 zeigt nun eine vereinfachte Seitenansicht der Warenbündelungsvorrichtung 19b und insbesondere die Neigung der Ablageebene A, der Bandführungsebene B und der Abgabeebene C.

Wie bereits erwähnt, ist Bandführungsebene B vorteilhaft gegenüber einer Vertikalen z mit ihrem oberen Ende in eine stromabwärts gelegene Richtung beziehungsweise von der ersten Fördertechnik 29 weg geneigt. Mit anderen Worten ist die Bandführungsebene B vorteilhaft gegenüber einer Vertikalen z um einen ersten Neigungswinkel α von der ersten Fördertechnik derart weggeneigt, dass eine untere Schnittgerade g1 zwischen der Ablageebene A und der Bandführungsebene B und eine obere Schnittgerade g2 zwischen der Abgabeebene C und der Bandführungsebene B mit einem Horizontalabstand a angeordnet sind, wobei die untere Schnittgerade g1 gegenüber der oberen Schnittgeraden g2 (in der ersten Förderrichtung F1) rückversetzt ist. Noch anders gesagt ist die Bandführungsebene B gegenüber einer ersten, quer zur ersten Förderrichtung F1 ausgerichteten Vertikalebene y/z mit ihrem oberen Ende in eine stromabwärts gelegene Richtung beziehungsweise von der ersten Fördertechnik 29 weg geneigt. Die Bandführungsebene B ist also so geneigt, dass sich ein zur ersten Fördertechnik 29 weisender Öffnungswinkel zwischen der Bandführungsebene B und dem Banderolier-Ablageboden 26 gegenüber einer vertikalen Ausrichtung der Bandführungsebene B weiter öffnet (vergrößert). Der erste Neigungswinkel α liegt insbesondere in einem Bereich von 15-40° und im Speziellen in einem Bereich von 20-30°.

Wie bereits erwähnt ist es auch von Vorteil, wenn der Banderolier-Ablageboden 26 gegenüber einer Horizontalebene x/y mit seinem stromabwärts gelegenen beziehungsweise mit seinem von der ersten Fördertechnik 29 abgewandten Ende E nach unten geneigt ist. Mit anderen Worten ist dabei der Banderolier-Ablageboden 26 (das heißt dessen Ablageebene A) um einen zweiten Neigungswinkel β gegenüber einer Horizontalebene x/y derart geneigt, dass ein der ersten Fördertechnik 29 benachbartes Ende höher liegt als ein der ersten Fördertechnik 29 abgewandtes Ende E. Insbesondere kann der Banderolier-Ablageboden 26 rechtwinkelig zur Bandführungsebene B ausgerichtet sein. Der zweite Neigungswinkel β liegt insbesondere in einem Bereich von 15-40° und im Speziellen in einem Bereich von 20-30°.

Wie bereits erwähnt ist es auch von Vorteil, wenn die Abgabeebene C gegenüber einer Horizontalebene x/y mit ihrem stromabwärts gelegenen beziehungsweise mit ihrem der Banderoliermaschine 27 zugewandten Ende E nach unten geneigt. Mit anderen Worten ist die Abgabeebene C dabei um einen dritten Neigungswinkel γ gegenüber der Horizontalebene x/y derart geneigt, dass ein der Banderoliermaschine 27 abgewandtes Ende höher liegt als ein der Banderoliermaschine 27 benachbartes Ende D. Insbesondere kann die Abgabeebene C rechtwinkelig zur Bandführungsebene B ausgerichtet sein. Der dritte Neigungswinkel γ liegt insbesondere in einem Bereich von 15-40° und im Speziellen in einem Bereich von 20-30°.

Günstig ist es auch, wenn die Beschickungsfördervorrichtung 36b in einem Bereich von δ=30-50° und insbesondere in einem Bereich von δ=35-45° gegenüber einer Horizontalebene x/y derart geneigt ist, dass ein der Banderoliermaschine 27 abgewandtes Ende höher liegt als ein der Banderoliermaschine 27 benachbartes Ende G. Mit anderen Worten ist die Beschickungsfördervorrichtung 35b gegenüber einer Horizontalebene x/y mit ihrem stromabwärts gelegenen beziehungsweise mit ihrem der Banderoliermaschine 27 zugewandten Ende nach unten geneigt. Insbesondere kann die Beschickungsfördervorrichtung 35b rechtwinkelig zur Bandführungsebene B ausgerichtet sein.

Die Ladehilfsmittel sind in dem in den Fig. 2 bis 8 dargestellten Beispielen durch Transporttaschen beziehungsweise durch Hängetaschen13, 13a..13c gebildet. Dies ist aber keine notwendige Bedingung für die vorgestellten Warenbündelungsvorrichtungen 19a, 19b. Denkbar ist vielmehr auch, dass die Ladehilfsmittel von anderer Bauart sind und beispielsweise durch erste Transportladehilfsmittel 11a..11c gebildet sind. In diesem Fall können die ersten Transportladehilfsmittel 11a..11c auch stehend transportiert werden. Die Versorgungs-Fördertechnik 17 umfasst auch in diesem Fall eine Entladestation 40 zum Entladen der Fördergutbehälter 11a..11c, wobei die Entladestation 40 stromaufwärts an die erste Fördertechnik 29 der Warenbündelungsvorrichtung 19a, 19b angeschlossen ist. Die Versorgungs-Fördertechnik 17 ist zum Antransport des Fördergutbehälters 11a..11c in die Entladestation 40 und Abtransport des Fördergutbehälters 11a..11c aus der Entladestation 40 durch eine Antriebsvorrichtung oder durch Schwerkraft ausgebildet.

Fig. 9 zeigt eine beispielhafte Entladestation 40. Eine mögliche Ausführung einer solchen Entladestation 40 ist in der AT 520 517 B1 beschrieben. Konkret umfasst die Hängefördervorrichtung hier den auch in Fig. 1 dargestellten zweiten Auslagerabschnitt 18b zum Antransport der Fördergutbehälter 13, 13a..13c in die Entladestation 40 und zum Abtransport der Fördergutbehälter 13, 13a..13c aus der Entladestation 40 durch eine Antriebsvorrichtung oder durch Schwerkraft bewegbare Transportträger 45. Ein Fördergutbehälter 13, 13a..13c ist dabei über einen Hängeträger 46 gelenkig mit dem Transportträger 45 gekoppelt, wodurch der Hängeträger 46 um eine im Wesentlichen parallel zur Hängefördervorrichtung verlaufende Achse relativ zum Transportträger 46 schwenkbar ist. Für die Bewegung der Transportträger 45 über die Tragschiene des Auslagerabschnitts 18b sind im Transportträger 45 Rollen 47 drehbar gelagert, die auf der Tragschiene des Auslagerabschnitts 18b abrollen.

Generell ist es von Vorteil, wenn vor dem Schritt b) eine Unterlage auf dem Banderolier-Ablageboden 26 angeordnet wird, auf der die Waren 10a..10l gestapelt werden und die ebenfalls vom Band 25 eingeschlossen wird. Auf diese Weise kann der Warenstapel 24 stabilisiert werden. Die Unterlage kann beispielsweise aus Karton oder einem Kunststoff bestehen.

Besonders vorteilhaft ist es im Allgemeinen auch, wenn die Waren 10c im Schritt b) entsprechend ihrer Biegesteifigkeit auf den Warenstapel 24 abgegeben werden, wobei die Waren 10a..10l mit höherer Biegesteifigkeit im Warenstapel 24 unten angeordnet werden. Dies ist eine alternative oder zusätzliche Maßnahme zur Bildung in sich stabiler Warenstapel 24.

Von besonderem Vorteil ist es auch, wenn an die Versorgungs-Fördertechnik des Lager- und Kommissioniersystems 1 eine erste Warenbündelungsvorrichtung 19b angeschlossen ist, so wie sie in den Fig. 3 bis 8 dargestellt ist, und eine zweite Warenbündelungsvorrichtung 19a angeschlossen ist, so wie sie in Fig. 2 dargestellt ist. Vorteilhaft werden nun Waren 10a..10l mit niedrigerer Biegesteifigkeit in der ersten Warenbündelungsvorrichtung 19b und Waren 10a..10l mit höherer Biegesteifigkeit in der zweiten Warenbündelungsvorrichtung 19a gestapelt und gesichert. Dabei macht man sich den Vorteil zu Nutze, dass Waren 10a..10l mit höherer Biegesteifigkeit mit hoher Prozesssicherheit entlang einer Wurfparabel p bewegt und daher schneller zu einem Warenstapel 24 gebildet werden können. Waren 10a..10l mit niedrigerer Biegesteifigkeit, die nur mit geringer Prozesssicherheit entlang einer Wurfparabel p bewegt werden könnten, werden dagegen lediglich vertikal nach unten fallen gelassen. Insgesamt ergibt sich dadurch eine besonders ökonomische Betriebsweise des vorgestellten Lager- und Kommissioniersystems 1.

Günstig ist es auch, wenn nach dem Schritt b) ein Versanddokument (zum Beispiel ein Lieferschein und/oder eine Rechnung) auf dem Warenstapel 24 angeordnet wird, um welches das Band 25 ebenfalls herumgeführt wird. Dadurch sind Versanddokumente, auf welchen Daten über die Waren 10a..10l des Warenstapels 24 angeführt sind, direkt Teil des Warenstapels 24. Die Zugehörigkeit eines Versanddokument zu einem Warenstapel 24 ist daher besonders intuitiv erfassbar.

An dieser Stelle wird angemerkt, dass in dem in der Fig. 1 dargestellte Lager- und Kommissioniersystem 1 eine optionale Verpackungsmaschine 23 vorgesehen ist. Die Verpackungsmaschine 23 dient zum Verpacken des gesicherten Warenstapels 24 in eine Versandpackung (z.B. Polybag, Karton) und ist über die Versand-Fördertechnik 20 mit der zumindest einen Warenbündelungsvorrichtung 19a, 19b verbunden, durch welche Versand-Fördertechnik 20 die gesicherten Warenstapel 24 von der zumindest einen Warenbündelungsvorrichtung 19a, 19b zu der Verpackungsmaschine 23 antransportiert werden, wobei die Versand-Fördertechnik 20 an die zweite Fördertechnik 31 der zumindest einen Warenbündelungsvorrichtung 19a, 19b anschließt. Auf diese Weise kann der mit einem Band 25 beziehungsweise einer Banderole gesicherte Warenstapel 24 versandfertig gemacht werden. Denkbar ist natürlich auch, dass die (unverpackten) Warenstapel 24 direkt versendet werden ohne von einer Verpackungsmaschine 23 weiter verpackt zu werden.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Lager- und Kommissioniersystem
- 2: Gebäude
- 3a, 3b: Wareneingang
- 4a, 4b: Warenausgang
- 5: erster Lagerbereich

- 6: zweiter Lagerbereich
- 7: Warenlager
- 8: Lagerregal
- 9a, 9b: Regalbediengerät
- 10a..10l: Ware

- 11a..11c: erstes Transportladehilfsmittel
- 12: Lager-Hängebahn
- 13, 13a..13c: zweites Transportladehilfsmittel / Hängetasche
- 14: Einlagerfördertechnik
- 15a..15e: Einlager-Abschnitt

- 16: Umlagerroboter
- 17: Versorgungs-Fördertechnik
- 18a: Auslager-Abschnitt
- 19, 19a, 19b: Warenbündelungsvorrichtung
- 20: Versand-Fördertechnik

- 21, 21a..21e: autonomes Flurförderfahrzeug
- 22: Versand-Abschnitt
- 23: Verpackungsmaschine
- 24: Warenstapel
- 25: Band

- 26: Banderolier-Ablageboden
- 27: Banderoliermaschine
- 28: Bandführung
- 29: erste Fördertechnik
- 30: Fördervorrichtung

- 31: zweite Fördertechnik
- 32a, 32b: erster Rahmenteil
- 33a, 33b: zweiter Rahmenteil
- 34a, 34b: Ablagetisch
- 35a, 35b: Beschickungsfördervorrichtung

- 36a, 36b: Rutsche
- 37: Stapelanschlag
- 38: Antrieb Stapelanschlag
- 39: Rahmen
- 40: Entladestation

- 41: Warenabgabevorrichtung
- 42: Warenabgabevorrichtungs-Ablageboden
- 43: Warenabgabevorrichtungs-Bodenöffnung
- 44: Kamera
- 45: Transportträger
- 46: Hängeträger
- 47: Rolle

- A: Ablageebene
- B: Bandführungsebene
- C: Abgabeebene
- D: stromabwärts gelegenen Ende Fördervorrichtung/Abgabeebene
- E: stromabwärts gelegenes Ende Banderolier-Ablageboden

- F1, F2: Förderrichtung
- G: stromabwärts gelegenes Ende Beschickungsfördervorrichtung

- a: Horizontalabstand Schnittgeraden
- g1: untere Schnittgerade
- g2: obere Schnittgerade
- p: Parabel
- v: vertikale Linie

- x: erste Horizontalrichtung
- y: zweite Horizontalrichtung
- z: Vertikalrichtung

- α: erster Neigungswinkel
- β: zweiter Neigungswinkel
- γ: dritter Neigungswinkel
- δ: vierter Neigungswinkel

## Patentansprüche

1. Lager- und Kommissioniersystem (1) mit
- einem Lagerbereich (5, 6),
- zumindest einer Warenbündelungsvorrichtung (19, 19a, 19b) zum Stapeln von Waren (10a..10l) und Sichern des Warenstapels (24) mit einem Band (25), umfassend einen Banderolier-Ablageboden (26), welcher eine Ablageebene (A) definiert und auf dem die Waren (10a..10l) stapelbar sind,
eine automatische Banderoliermaschine (27) mit einer Bandführung (28), mit welcher das Band (25) um den Warenstapel (24) herum geführt wird und die eine Bandführungsebene (B) definiert, welche die Ablageebene (A) schneidet,
eine in einer ersten Förderrichtung (F1) vor der Banderoliermaschine (27) angeordnete erste Fördertechnik (29) zum Antransport der Waren (10a..10l), welche eine Fördervorrichtung (30) umfasst, die eine Abgabeebene (C) definiert und von welcher die Waren (10a..10l) auf den Banderolier-Ablageboden (26) abgegeben werden, und die mit ihrem in der ersten Förderrichtung (F1) stromabwärts gelegenen Ende (D) vom Banderolier-Ablageboden (26) in Vertikalrichtung (z) beabstandet und oberhalb vom Banderolier-Ablageboden (26) angeordnet ist, und
eine in einer zweiten Förderrichtung (F2) nach der Banderoliermaschine (27) angeordnete zweite Fördertechnik (31) zum Abtransport des gesicherten Warenstapels (24),
- einer Versorgungs-Fördertechnik (17) zwischen dem Lagerbereich (5, 6) und der zumindest einen Warenbündelungsvorrichtung (19, 19a, 19b), durch welche die Waren (10a..10l) mit Ladehilfsmitteln (11a..11c, 13, 13a..13c) zur zumindest einen Warenbündelungsvorrichtung (19, 19a, 19b) antransportiert werden können, und
- einer Verpackungsmaschine (23) zum Verpacken des gesicherten Warenstapels (24) in eine Versandpackung, welche Verpackungsmaschine (23) über eine Versand-Fördertechnik (20) mit der zumindest einen Warenbündelungsvorrichtung (19, 19a, 19b) verbunden ist, durch welche Versand-Fördertechnik (20) der gesicherte Warenstapel (24) von der zumindest einen Warenbündelungsvorrichtung (19, 19a, 19b) zu der Verpackungsmaschine (23) antransportiert wird, wobei die Versand-Fördertechnik (20) an die zweite Fördertechnik (31) der zumindest einen Warenbündelungsvorrichtung (19, 19a, 19b) anschließt.

2. Lager- und Kommissioniersystem (1) nach Anspruch 1, **dadurch gekennzeichnet, dass** die Bandführung (28) gegenüber dem Banderolier-Ablageboden (26) vorragende erste Rahmenteile (32a, 32b) und einen diese verbindenden zweiten Rahmenteil (33a, 33b) umfasst, wobei die Bandführungsebene (B) zwischen den ersten Rahmenteilen (32a, 32b) und dem zweiten Rahmenteil (33a, 33b) aufgespannt ist und dass die Bandführung (28) an den ersten Rahmenteilen (32a, 32b) und dem zweiten Rahmenteil ausgebildet ist.

3. Lager- und Kommissioniersystem (1) nach Anspruch 1 oder 2, **dadurch gekennzeichnet, dass** der Banderolier-Ablageboden (26) zu beiden Seiten der Bandführungsebene (B) und einander gegenüberliegend angeordnete Ablagetische (34a, 34b) aufweist, welche von der ersten Fördertechnik (29) und der zweiten Fördertechnik (31) umfasst sind.

4. Lager- und Kommissioniersystem (1) nach Anspruch 1 oder 2, **dadurch gekennzeichnet, dass** der Banderolier-Ablageboden (26) zu beiden Seiten der Bandführungsebene (B) und einander gegenüberliegend angeordnete Banderolier-Fördervorrichtungen aufweist, welche von der ersten Fördertechnik (29) und der zweiten Fördertechnik (31) umfasst sind.

5. Lager- und Kommissioniersystem (1) nach einem der Ansprüche 1 bis 4, **dadurch gekennzeichnet, dass** die erste Förderrichtung (F1) der Waren (10a..10l) auf der ersten Fördertechnik (29) der zweiten Förderrichtung (F2) des gesicherten Warenstapels (24) auf der zweiten Fördertechnik (31) entspricht.

6. Lager- und Kommissioniersystem (1) nach einem der Ansprüche 1 bis 5, **dadurch gekennzeichnet, dass** die Bandführungsebene (B) gegenüber einer Vertikalen (z) um einen ersten Neigungswinkel (α) von der ersten Fördertechnik (29) derart weggeneigt ist, dass eine untere Schnittgerade (g1) zwischen der Bandführungsebene (B) und der Ablageebene (A) und eine obere Schnittgerade (g2) zwischen der Bandführungsebene (B) und der Abgabeebene (C) mit einem Horizontalabstand (a) angeordnet sind, wobei die untere Schnittgerade (g1) gegenüber der oberen Schnittgeraden (g2) rückversetzt ist.

7. Lager- und Kommissioniersystem (1) nach Anspruch 6, **dadurch gekennzeichnet, dass** die untere Schnittgerade (g1) zwischen den ersten Rahmenteilen (32a, 32b) der Bandführung (28) verläuft.

8. Lager- und Kommissioniersystem (1) nach einem der Ansprüche 1 bis 7, **dadurch gekennzeichnet, dass** der Banderolier-Ablageboden (26) um einen zweiten Neigungswinkel (β) gegenüber einer Horizontalebene (x/y) derart geneigt ist, dass ein der ersten Fördertechnik (29) benachbartes Ende höher liegt als ein der ersten Fördertechnik (29) abgewandtes Ende (E).

9. Lager- und Kommissioniersystem (1) nach einem der Ansprüche 1 bis 8, **dadurch gekennzeichnet, dass** die Abgabeebene (C) um einen dritten Neigungswinkel (γ) gegenüber einer Horizontalebene (x/y) derart geneigt ist, dass ein der Banderoliermaschine (27) abgewandtes Ende höher liegt als ein der Banderoliermaschine (27) benachbartes Ende (D).

10. Lager- und Kommissioniersystem (1) nach einem der Ansprüche 1 bis 9, **dadurch gekennzeichnet, dass** die Warenbündelungsvorrichtung (19, 19a, 19b) einen im Bereich des Banderolier-Ablagebodens (26) in der zweiten Förderrichtung (F2) der zweiten Fördertechnik (31) nach der Bandführungsebene (B) angeordneten Stapelanschlag (37) aufweist, welcher durch wenigstens einen Antrieb (38) zwischen einer aus dem Transportweg zurückgezogenen Freigabestellung und einer in den Transportweg vorragenden Stapelstellung bewegbar ist, wobei die zweite Fördertechnik (31) den Transportweg ausbildet, entlang welchem der gesicherte Warenstapel (24) transportiert wird.

11. Lager- und Kommissioniersystem (1) nach einem der Ansprüche 6 bis 10,
**dadurch gekennzeichnet, dass** die Fördervorrichtung (30) der ersten Fördertechnik (29) eine Warenabgabevorrichtung (41) mit einem Warenabgabevorrichtungs-Ablageboden (42) und mit einer damit verschließbaren Warenabgabevorrichtungs-Bodenöffnung (43) umfasst, wobei eine vertikale Linie (v) am stromabwärts gelegenen Ende (D) der Warenabgabevorrichtungs-Bodenöffnung (43) durch die Bandführungsebene (B) führt, bevor sie auf den Banderolier-Ablageboden (26) trifft.

12. Lager- und Kommissioniersystem (1) nach Anspruch 11, **dadurch gekennzeichnet, dass** der Warenabgabevorrichtungs-Ablageboden (42) drehbar um eine Achse normal zum Warenabgabevorrichtungs-Ablageboden (42) an einem Rahmen (39) der Warenbündelungsvorrichtung (19, 19a, 19b) gelagert ist.

13. Lager- und Kommissioniersystem (1) nach Anspruch 11 oder 12, **dadurch gekennzeichnet, dass** eine Kamera (44) oberhalb des Warenabgabevorrichtungs-Ablagebodens (42) angeordnet ist.

14. Lager- und Kommissioniersystem (1) nach einem der Ansprüche 11 bis 13,
**dadurch gekennzeichnet, dass** der Warenabgabevorrichtungs-Ablageboden (42) durch wenigstens einen Antrieb zwischen einer von der Warenabgabevorrichtungs-Bodenöffnung (43) zurückgezogenen Freigabestellung und einer die Warenabgabevorrichtungs-Bodenöffnung (43) verschließenden Aufnahmestellung bewegbar ist und dass der Warenabgabevorrichtungs-Ablageboden (42) in der Aufnahmestellung die Abgabeebene (C) definiert.

15. Lager- und Kommissioniersystem (1) nach einem der Ansprüche 11 bis 14,
**dadurch gekennzeichnet, dass** die erste Fördertechnik (29) zusätzlich eine in der ersten Förderrichtung (F1) stromaufwärts zur Warenabgabevorrichtung (41) angeordnete Beschickungsfördervorrichtung (35b) aufweist, welche eine Rutsche (36b) oder eine angetriebene Fördervorrichtung umfasst, deren stromabwärts gelegenes Ende (G) zu dem in die Aufnahmestellung bewegten Warenabgabevorrichtungs-Ablageboden (42) in Vertikalrichtung (z) beabstandet und oberhalb von diesem angeordnet ist.

16. Lager- und Kommissioniersystem (1) nach einem der Ansprüche 1 bis 10, **dadurch gekennzeichnet, dass**
- die erste Fördertechnik (29) eine Beschickungsfördervorrichtung (35a) aufweist, welche eine Rutsche (36a) oder eine angetriebene Fördervorrichtung umfasst,
- das stromabwärts gelegene Ende (D) der Beschickungsfördervorrichtung (35a) sowohl vertikal als auch horizontal von der unteren Schnittgerade (g1) zwischen der Bandführungsebene (B) und der Ablageebene (A) beabstandet ist, und
- zumindest eine Parabel (p) existiert, die vom stromabwärts gelegenen Ende (D) der Beschickungsfördervorrichtung (35a) durch die Bandführungsebene (B) hindurch auf den Banderolier-Ablageboden (26) führt und deren Tangente im Anfangspunkt mit der Abgabeebene (C) der Beschickungsfördervorrichtung (35a) übereinstimmt.

17. Lager- und Kommissioniersystem (1) nach einem der Ansprüche 6 bis 16, **dadurch gekennzeichnet, dass**
- der erste Neigungswinkel (α) in einem Bereich von 15-40° liegt, und/oder
- der zweite Neigungswinkel (β) in einem Bereich von 15-40° liegt, und/oder
- der dritte Neigungswinkel (γ) in einem Bereich von 15-40° liegt.

18. Lager- und Kommissioniersystem (1) nach einem der Ansprüche 15 bis 17,
**dadurch gekennzeichnet, dass** die Beschickungsfördervorrichtung (35a, 35b) in einem Bereich von 30-50° gegenüber einer Horizontalebene (x/y) derart geneigt ist, dass ein der Banderoliermaschine (27) abgewandtes Ende höher liegt als ein der Banderoliermaschine (27) benachbartes Ende.

19. Lager- und Kommissioniersystem (1) nach Anspruch 1, **dadurch gekennzeichnet, dass** die Ladehilfsmittel (13, 13a..13c) durch Fördergutbehälter gebildet sind und dass die Versorgungs-Fördertechnik (17) eine Hängefördervorrichtung zum hängenden Transport der Fördergutbehälter (13, 13a..13c) und zumindest eine Entladestation (40) zum Entladen der Fördergutbehälter (13, 13a..13c) umfasst, wobei die Entladestation (40) stromaufwärts an die erste Fördertechnik (29) der zumindest einen Warenbündelungsvorrichtung (19, 19a, 19b) angeschlossen ist.

20. Lager- und Kommissioniersystem (1) nach Anspruch 19, **dadurch gekennzeichnet, dass** die Hängefördervorrichtung zum Antransport des Fördergutbehälters (13, 13a..13c) in die Entladestation (40) und Abtransport des Fördergutbehälters (13, 13a..13c) aus der Entladestation (40) durch eine Antriebsvorrichtung oder durch Schwerkraft bewegbare Transportträger (45) umfasst, wobei der Fördergutbehälter (13, 13a..13c) über einen Hängeträger (46) gelenkig mit dem Transportträger (45) gekoppelt ist, wodurch der Hängeträger (46) um eine im Wesentlichen parallel zur Hängefördervorrichtung verlaufende Achse relativ zum Transportträger (45) schwenkbar ist.

21. Verfahren zum Stapeln von Waren (10a..10l) und zum Sichern der gestapelten Waren (10a..10l) mit einem um den Warenstapel (24) gewickelten Band (25) in einer Warenbündelungsvorrichtung (19, 19a, 19b), welche Waren (10a..10l) zuvor mit Ladehilfsmitteln (11a..11c, 13, 13a..13c) zur Warenbündelungsvorrichtung (19, 19a, 19b) mit einer zwischen dem Lagerbereich (5, 6) und der Warenbündelungsvorrichtung (19, 19a, 19b) angeordneten Versorgungs-Fördertechnik (17) antransportiert werden, umfassend die Schritte
a) Antransportieren der Waren (10a..10l) zur Bildung eines Warenstapels (24) mit einer ersten Fördertechnik (29), welche in einer ersten Förderrichtung (F1) vor einer Banderoliermaschine (27) angeordnet ist und welche eine Fördervorrichtung (30) umfasst, von welcher die Waren (10a..10l) auf einen Banderolier-Ablageboden (26) abgegeben werden, wobei sich eine von der Fördervorrichtung (30) abgegebene Ware (10a..10l) zumindest abschnittsweise ohne Unterstützung von unten zum Banderolier-Ablageboden (26) bewegt und die Bewegung eine nach unten weisende Vertikalkomponente aufweist, und wobei die Banderoliermaschine (27) eine Bandführung (28) aufweist, die das Band (25) um den Warenstapel (24) herumführt und eine Bandführungsebene (B) definiert,
b) Stapeln dieser Waren (10a..10l) zu einem Warenstapel (24) auf einer Ablageebene (A) des Banderolier-Ablagebodens (26), wobei die Ablageebene (A) die Bandführungsebene (B) entlang einer unteren Schnittgeraden (g1) schneidet und die Waren (10a..10l) auf dieser unteren Schnittgeraden (g1) gestapelt werden,
c) Anbringen eines Bands (25) um diesen Warenstapel (24) mit der Banderoliermaschine (27),
d) Abtransportieren des mit dem Band (25) gesicherten Stapels über eine in einer zweiten Förderrichtung (F2) nach der Banderoliermaschine (27) angeordnete zweite Fördertechnik (31), und
e) Antransportieren eines gesicherten Warenstapels (24) von der Warenbündelungsvorrichtung (19, 19a, 19b) zu einer Verpackungsmaschine (23) zum Verpacken des gesicherten Warenstapels (24) in eine Versandpackung, welche Verpackungsmaschine (23) über eine Versand-Fördertechnik (20) mit der Warenbündelungsvorrichtung (19, 19a, 19b) verbunden ist, welche Versand-Fördertechnik (20) an die zweite Fördertechnik (31) der Warenbündelungsvorrichtung (19, 19a, 19b) anschließt.

22. Verfahren nach Anspruch 21, **dadurch gekennzeichnet, dass** die Schritte a) und b) umfassen
i) das Antransportieren zumindest einer Ware (10a..10l) über eine von der ersten Fördertechnik (29) umfassten Beschickungsfördervorrichtung, welche eine Rutsche (36b) oder eine angetriebene Fördervorrichtung aufweist, und das Abgeben der zumindest einen Ware (10a..10l) auf einen Warenabgabevorrichtungs-Ablageboden (42) einer Warenabgabevorrichtung (41), welche von der Fördervorrichtung der ersten Fördertechnik (29) umfasst ist und sich in einer Aufnahmestellung befindet, wobei der Warenabgabevorrichtungs-Ablageboden (42)
- in eine die Warenabgabevorrichtungs-Bodenöffnung (43) verschließende Aufnahmestellung bewegt wird, wenn eine Ware (10a..10l) oder mehrere Waren (10a..10l) auf dem Warenabgabevorrichtungs-Ablageboden (42) aufgenommen werden soll(en), und
- in eine von der Warenabgabevorrichtungs-Bodenöffnung (43) zurückgezogene Freigabestellung bewegt wird, wenn eine Ware (10a..10l) oder mehrere Waren (10a..10l) von dem Warenabgabevorrichtungs-Ablageboden (42) abgegeben werden soll(en),
ii) Bewegen des Warenabgabevorrichtungs-Ablagebodens (42) in die zurückgezogene Freigabestellung, nachdem eine Ware (10a..10l) oder mehrere Waren (10a..10l) auf den Warenabgabevorrichtungs-Ablageboden (42) abgegeben wurde(n), um diese Ware / Waren (10a..10l) auf den Banderolier-Ablageboden (26) fallenzulassen, und
iii) Wiederholen der Schritte i) und ii), sofern der auf dem Banderolier-Ablageboden (26) gebildete Warenstapel (24) unvollständig ist.

23. Verfahren nach Anspruch 22, **dadurch gekennzeichnet, dass** die von der Warenabgabevorrichtung (41) abgegebenen Waren (10a..10l) vertikal durch die Bandführungsebene (B) fallen, bevor sie den Banderolier-Ablageboden (26) erreichen.

24. Verfahren nach Anspruch 22 oder 23, **dadurch gekennzeichnet, dass** eine Ausrichtung der Ware (10a..10l) auf dem Warenabgabevorrichtungs-Ablageboden (42) zwischen den Schritten i) und ii) mit Hilfe einer über dem Warenabgabevorrichtungs-Ablageboden (42) angeordneten Kamera (44) ermittelt und durch Drehen des Warenabgabevorrichtungs-Ablagebodens (42) um eine normal zum Warenabgabevorrichtungs-Ablageboden (42) ausgerichtete Achse korrigiert wird, wenn die ermittelte Ist-Orientierung der Ware (10a..10l) nicht einer Soll-Orientierung der Ware (10a..10l) entspricht.

25. Verfahren nach Anspruch 21, **dadurch gekennzeichnet, dass** der Schritt a) umfasst
- das Antransportieren über eine von der ersten Fördertechnik (29) umfassten Beschickungsfördervorrichtung (35a, 35b), welche eine Rutsche (36a, 36b) oder eine angetriebene Fördervorrichtung umfasst, und
- das Abgeben der Ware (10a..10l) mit einer Geschwindigkeit, welche eine Horizontalkomponente aufweist, wobei eine von der Ware (10a..101) beschriebene Wurfparabel (p) durch die Bandführungsebene (B) führt, bevor sie auf dem Banderolier-Ablageboden (26) endet.

26. Verfahren nach einem der Ansprüche 21 bis 25, **dadurch gekennzeichnet, dass** die Waren (10a..10l) Waren (10a..10l) mit einer niedrigeren Biegesteifigkeit und Waren (10a..10l) mit einer höheren Biegesteifigkeit umfassen und dass im Schritt b) die Waren (10a..10l) entsprechend ihrer Biegesteifigkeit auf den Warenstapel (24) abgegeben werden, wobei die Waren (10a..10l) mit höherer Biegesteifigkeit im Warenstapel (24) unten angeordnet werden.

27. Verfahren nach einem der Ansprüche 21 bis 26, **dadurch gekennzeichnet, dass** vor dem Schritt b) eine Unterlage auf dem Banderolier-Ablageboden (26) angeordnet wird, auf der die Waren (10a..10l) gestapelt werden und die ebenfalls vom Band (25) eingeschlossen wird.

28. Verfahren nach einem der Ansprüche 21 bis 27, **dadurch gekennzeichnet, dass** nach dem Schritt b) ein Versanddokument auf dem Warenstapel (24) angeordnet wird, um welches das Band (25) ebenfalls herumgeführt wird.

29. Verfahren nach einem der Ansprüche 21 bis 28, **dadurch gekennzeichnet, dass** ein im Bereich des Banderolier-Ablagebodens (26) in der zweiten Förderrichtung (F2) der zweiten Fördertechnik (31) nach der Bandführungsebene (B) angeordneter Stapelanschlag (37) bereitgestellt wird und dass die zweite Fördertechnik (31) einen Transportweg ausbildet, entlang welchem der gesicherte Warenstapel (24) transportiert wird, und dass der Stapelanschlag (37) vor dem Schritt b) in eine in den Transportweg der Waren (10a..10l) vorragende Stapelstellung und vor dem Schritt d) in eine aus dem Transportweg zurückgezogene Freigabestellung bewegt wird.

30. Verfahren nach Anspruch 29, **dadurch gekennzeichnet, dass**
- der Stapelanschlag (37) rechtwinkelig zum Banderolier-Ablageboden (26) ausgerichtet wird, wenn im Schritt b) auf dem Banderolier-Ablageboden (26) im Wesentlichen gleich große Waren (10a..10l) gestapelt werden, und/oder
- der Stapelanschlag (37) schräg zum Banderolier-Ablageboden (26) ausgerichtet wird, wenn im Schritt b) auf dem Banderolier-Ablageboden (26) im Wesentlichen unterschiedlich große und entsprechend ihrer Größe sortierte Waren (10a..10l) gestapelt werden, wobei größere Waren (10a..10l) im Warenstapel (24) weiter unten und kleinerer Waren (10a..10l) im Warenstapel (24) weiter oben angeordnet werden.

## Claims

1. A storage and picking system (1) comprising
- a storage region (5, 6),
- at least one article bundling device (19, 19a, 19b) for stacking articles (10a..10l) and securing the stack of articles (24) with a band (25), comprising a banding support (26) which defines a support plane (A) and on which the articles (10a..10l) are stackable,
an automatic banding machine (27) with a band guide (28), with which the band (25) is guided around the stack of articles (24) and which defines a band guiding plane (B) which intersects with the support plane (A),
a first conveying system (29) for transporting the articles (10a..10l), arranged upstream of the banding machine (27) in a first conveying direction (F1), and comprising a conveying device (30) which defines a discharging plane (C) from which the articles (10a..10l) are discharged onto the banding support (26) and which is arranged with its end (D) located downstream in the first conveying direction (F1) spaced in vertical direction (z) apart from the banding support (26) and above the banding support (26), and
a second conveying system (31) for transporting the secured stack of articles (24) away, arranged downstream of the banding machine (27) in a second conveying direction (F2),
- a supply conveying system (17) arranged between the storage region (5, 6) and the at least one article bundling device (19, 19a, 19b), by which the articles (10a..10l) can be transported to the at least one article bundling device (19, 19a, 19b) using loading aids (11a..11c, 13, 13a..13c), and
- a packing machine (23) for packing the secured stack of articles (24) into a shipping package, which packing machine (23) is connected with the at least one article bundling device (19, 19a, 19b) via a shipping conveying system (20), by which supply conveying system (20) the secured stack of articles (24) is transported from the first article bundling device (19, 19a, 19b) to the packing machine (23), wherein the shipping conveying system (20) is adjoined to the second conveying system (31) of the at least one article bundling device (19, 19a, 19b).

2. The storage and picking system (1) according to claim 1, **characterized in that** the band guide (28) comprises first frame parts (32a, 32b) protruding in relation to the banding support (26) and a second frame part (33a, 33b) connecting the first frame parts, wherein the band guiding plane (B) extends between the first frame parts (32a, 32b) and the second frame part (33a, 33b) and that the band guide (28) is formed on the first frame parts (32a, 32b) and the second frame part.

3. The storage and picking system (1) according to claim 1 or 2, **characterized in that** the banding support (26) has support tables (34a, 34b) arranged on both sides of the band guiding plane (B) and opposite each other, which support tables (34a, 34b) are comprised by the first conveying system (29) and the second conveying system (31).

4. The storage and picking system (1) according to claim 1 or 2, **characterized in that** the banding support (26) has banding conveying devices arranged on both sides of the band guiding plane (B) and opposite each other, which banding conveying devices are comprised by the first conveying system (29) and the second conveying system (31).

5. The storage and picking system (1) according to one of claims 1 to 4, **characterized in that** the first conveying direction (F1) of the articles (10a..10l) on the first conveying system (29) corresponds to the second conveying direction (F2) of the secured stack of articles (24) on the second conveying system (31).

6. The storage and picking system (1) according to one of claims 1 to 5, **characterized in that** the band guiding plane (B) is inclined in relation to a vertical (z) by a first angle of inclination (α) away from the first conveying system (29) such that a bottom intersecting line (g1) between the band guiding plane (B) and the support plane (A) and a top intersecting line (g2) between the band guiding plane (B) and the discharging plane (C) are arranged at a horizontal distance (a), wherein the bottom intersecting line (g1) is offset backward in relation to the top intersecting line (g2).

7. The storage and picking system (1) according to claim 6, **characterized in that** the bottom intersecting line (g1) extends between the first frame parts (32a, 32b) of the band guide (28).

8. The storage and picking system (1) according to one of claims 1 to 7, **characterized in that** the banding support (26) is inclined in relation to a horizontal plane (x/y) by a second angle of inclination (β) such that an end adjacent to the first conveying system (29) is positioned higher than an end (E) facing away from the first conveying system (29).

9. The storage and picking system (1) according to one of claims 1 to 8, **characterized in that** the discharging plane (C) is inclined in relation to a horizontal plane (x/y) by a third angle of inclination (γ) such that an end facing away from the banding machine (27) is positioned higher than an end (D) adjacent to the banding machine (27).

10. The storage and picking system (1) according to one of claims 1 to 9, **characterized in that** the article bundling device (19, 19a, 19b) comprises a stacking stop (37) arranged in the region of the banding support (26) downstream of the band guiding plane (B) in the second conveying direction (F2) of the second conveying system (31), which stacking stop (37) is movable by at least one drive (38) between a release position withdrawn from the transport path and a stacking position protruding into the transport path, wherein the second conveying system (31) forms the transport path along which the secured stack of articles (24) is transported.

11. The storage and picking system (1) according to one of claims 6 to 10, **characterized in that** the conveying device (30) of the first conveying system (29) comprises an article discharging device (41) having an article discharging device support (42) and an article discharging device bottom opening (43), which is closable therewith, wherein a vertical line (v) at the end (D) of the article discharging device bottom opening (43) located downstream leads through the band guiding plane (B) before meeting the banding support (26).

12. The storage and picking system (1) according to claim 11, **characterized in that** the article discharging device support (42) is mounted on a frame (39) of the first article bundling device (19, 19a, 19b) so as to be rotatable about an axis normal in relation to the article discharging device support (42).

13. The storage and picking system (1) according to claim 11 or 12, **characterized in that** a camera (44) is arranged above the article discharging device support (42).

14. The storage and picking system (1) according to one of claims 11 to 13, **characterized in that** the article discharging device support (42) is movable by at least one drive between a release position withdrawn from the article discharging device bottom opening (43) and a receiving position closing the article discharging device bottom opening (43), and that the article discharging device support (42) in the receiving position defines the discharging plane (C).

15. The storage and picking system (1) according to one of claims 11 to 14, **characterized in that** the first conveying system (29) further comprises a feeding conveying device (35b) arranged upstream of the article discharging device (41) in the first conveying direction (F1), which feeding conveying device (35b) has a chute (36b) or a driven conveying device, the downstream end (G) of which is located spaced in the vertical direction (z) apart from the article discharging device support (42) moved into the receiving position, and arranged above same.

16. The storage and picking system (1) according to one of claims 1 to 10, **characterized in that**
- the first conveying system (29) further comprises a feeding conveying device (35a) having a chute (36a) or a driven conveying device,
- the end (D) of the feeding conveying device (35a) located downstream is spaced both vertically and horizontally apart from the bottom intersecting line (g1) between the band guiding plane (B) and the support plane (A), and
- there is at least one parabola (p) leading from the end (D) of the feeding conveying device (35a) located downstream through the band guiding plane (B) onto the banding support (26) and a tangent of the at least one parabola (p), at the starting point, coincides with the discharging plane (C) of the feeding conveying device (35a).

17. The storage and picking system (1) according to one of claims 6 to 16, **characterized in that**
- the first angle of inclination (α) is in a range of 15-40°, and/or
- the second angle of inclination (β) is in a range of 15-40°, and/or
- the third angle of inclination (γ) is in a range of 15-40°.

18. The storage and picking system (1) according to one of claims 15 to 17, **characterized in that** the feeding conveying device (35a, 35b) is inclined in relation to a horizontal plane (x/y) in a range of 30-50° such that an end facing away from the banding machine (27) is positioned higher than an end adjacent to the banding machine (27).

19. The storage and picking system (1) according to claim 1, **characterized in that** the loading aids (13, 13a..13c) are formed by article containers, and that the supply conveying system (17) comprises an overhead conveying device for the suspended transport of the article containers (13, 13a..13c) and at least one unloading station (40) for unloading the article containers (13, 13a..13c), wherein the unloading station (40) is adjoined upstream to the first conveying system (29) of the at least one article bundling device (19, 19a, 19b).

20. The storage and picking system (1) according to claim 19, **characterized in that** the overhead conveying device comprises transport carriers (45) for transporting the article container (13, 13a..13c) to the unloading station (40) and transporting the article container (13, 13a..13c) away from the unloading station (40), which transport carriers (45) are movable by a driving device or by gravity, wherein the article container (13, 13a..13c) is coupled, in an articulated manner, to a transport carrier (45) via a suspended support (46), whereby the suspended support (46) is pivotable relative to the transport carrier (45) about an axis extending essentially parallel to the overhead conveying device.

21. A method for stacking articles (10a..10l) and for securing the stacked articles (10a..10l) with a band (25) wound around the stack of articles (24) in an article bundling device (19, 19a, 19b), which articles (10a..10l) are beforehand transported to the article bundling device (19, 19a, 19b) using loading aids (11a..11c, 13, 13a..13c) with a supply conveying system (17) arranged between the storage region (5, 6) and the article bundling device (19, 19a, 19b), comprising the steps
a) forwarding the articles (10a..10l) for forming a stack of articles (24) using a first conveying system (29), which is arranged upstream of the banding machine (27) in a first conveying direction (F1) and which comprises a conveying device (30) from which the articles (10a..10l) are discharged onto a banding support (26), wherein an article (10a..10l) discharged from the conveying device (30) at least in sections moves to the banding support (26) without support from below and the movement has a vertical component pointing downward, and wherein the banding machine (27) comprises a band guide (28), which guides the band (25) around the stack of articles (24) and defines a band guiding plane (B),
b) stacking these articles (10a..10l) to form a stack of articles (24) on a support plane (A) of the banding support (26), wherein the support plane (A) intersects the band guiding plane (B) along a bottom intersecting line (g1) and the articles (10a..10l) are stacked on this bottom intersecting line (g1),
c) applying a band (25) around this stack of articles (24) using the banding machine (27),
d) discharging the stack secured with the band (25) via a second conveying system (31) arranged downstream of the banding machine (27) in a second conveying direction (F2), and
e) transporting a secured stack of articles (24) from the article bundling device (19, 19a, 19b) to a packing machine (23) for packing the secured stack of articles (24) into a shipping package, which packing machine (23) is connected with the article bundling device (19, 19a, 19b) via a shipping conveying system (20), which shipping conveying system (20) adjoins the second conveying system (31) of the article bundling device (19, 19a, 19b).

22. The method according to claim 21, **characterized in that** steps a) and b) comprise
i) forwarding at least one article (10a..10l) via a feeding conveying device comprised by the first conveying system (29), the feeding conveying device having a chute (36b) or a driven conveying device, and discharging of the at least one article (10a..10l) onto an article discharging device support (42) of an article discharging device (41) comprised by the conveying device of the first conveying system (29) and which is in a receiving position, wherein the article discharging device support (42)
- is moved into a receiving position closing the article discharging device bottom opening (43), when one article (10a..10l) or multiple articles (10a..10l) is/are to be received on the article discharging device support (42), and
- is moved into a release position withdrawn from the article discharging device bottom opening (43), when one article (10a..10l) or multiple articles (10a..10l) is/are to be discharged from the article discharging device support (42),
ii) moving the article discharging device support (42) into the withdrawn release position after one article (10a..10l) or multiple articles (10a..10l) has/have been discharged onto the article discharging device support (42) in order to drop the article/articles (10a..10l) onto the banding support (26), and
iii) repeating steps i) and ii) if the stack of articles (24) formed on the banding support (26) is incomplete.

23. The method according to claim 22, **characterized in that** the articles (10a..10l) discharged from the article discharging device (41) drop vertically through the band guiding plane (B) before reaching the banding support (26).

24. The method according to claim 22 or 23, **characterized in that**, between the steps i) and ii), an alignment of the articles (10a..10l) on the article discharging device support (42) is detected by a camera (44) arranged above the article discharging device support (42), and is corrected by rotating the article discharging device support (42) about an axis with normal alignment to the article discharging device support (42) if the detected actual orientation of the article (10a..10l) does not correspond to a target orientation of the article (10a..10l).

25. The method according to claim 21, **characterized in that** step a) comprises
- forwarding via a feeding conveying device (35a, 35b) comprised by the first conveying system (29), the feeding conveying device (35a, 35b) having a chute (36a, 36b) or a driven conveying device, and
- discharging the article (10a..10l) at a speed which has a horizontal component, wherein a parabola (p) described by the article (10a..10l) passes through the band guiding plane (B) before ending on the banding support (26).

26. The method according to one of claims 21 to 25, **characterized in that** the articles (10a..101) comprise articles (10a..101) with a lower bending stiffness and articles (10a..101) with a higher bending stiffness and that, in step b), the articles (10a..101) are discharged onto the stack of articles (24) according to their bending stiffness, wherein the articles (10a..101) with higher bending stiffness are arranged at the bottom of the stack of articles (24).

27. The method according to one of claims 21 to 26, **characterized in that**, prior to step b), a support pad is arranged on the banding support (26), on which the articles (10a..101) are stacked and which is also enclosed by the band (25).

28. The method according to one of claims 21 to 27, **characterized in that**, after step b), a shipping document is arranged on the stack of articles (24), around which the belt (25) is also guided.

29. The method according to one of claims 21 to 28, **characterized in that** a stacking stop (37) arranged in the region of the banding support (26) and downstream of the band guiding plane (B) in the second conveying direction (F2) of the second conveying system (31) is provided, and that the second conveying system (31) forms a transport path along which the secured stack of articles (24) is transported, and that, prior to step b), the stacking stop (37) is moved into a stacking position protruding into the transport path of the articles (10a..101), and prior to step d), the stacking stop (37) is moved into a release position withdrawn from the transport path.

30. The method according to claim 29, **characterized in that**
- the stacking stop (37) is aligned at a right angle to the banding support (26) if, in step b), articles (10a..101) of essentially the same size are stacked on the banding support (26), and/or
- the stacking stop (37) is aligned oblique to the banding support (26) if, in step b), articles (10a..101) of essentially different sizes and sorted according to their size are stacked on the banding support (26), wherein larger articles (10a.. 101) are arranged lower down in the stack of articles (24) and smaller articles (10a..101) are arranged further up in the stack of articles (24).

## Revendications

1. Système de stockage et de préparation de commandes (1) avec
- une zone de stockage (5, 6),
- au moins un dispositif de regroupement d'articles (19, 19a, 19b) pour l'empilage d'articles (10a... 101) et la sécurisation de l'empilement d'articles (24) avec une bande (25), comprenant
un fond de dépôt de banderolage (26) qui définit un plan de dépôt (A) et sur lequel les articles (10a... 101) peuvent être empilés,
une machine de banderolage automatique (27) avec un guidage de bande (28), avec lequel la bande (25) est guidée autour de l'empilement d'articles (24) et qui définit un plan de guidage de bande (B) qui coupe le plan de dépôt (A),
un premier système de convoyage (29) disposé, dans une première direction de convoyage (F1), avant la machine de banderolage (27), pour le transport des articles (10a... 101), qui comprend un dispositif de convoyage (30) qui définit un plan de distribution (C) et à partir duquel les articles (10a... 101) sont distribués sur le fond de dépôt de banderolage (26) et qui est disposé, avec son extrémité aval (D), dans la première direction de convoyage (F1), de manière distante par rapport au fond de dépôt de banderolage (26) dans la direction verticale (z) et au-dessus du fond de dépôt de banderolage (26) et
un deuxième système de convoyage (31), disposé, dans une deuxième direction de convoyage (F2), après la machine de banderolage (27), pour le transport de l'empilement d'articles (24) sécurisé,
- un système de convoyage d'alimentation (17) entre la zone de stockage (5, 6) et l'au moins un dispositif de regroupement d'articles (19, 19a, 19b), grâce auquel les articles (10a... 101) peuvent être transportés, avec des moyens de chargement (11a... 11c, 13, 13a... 13c), vers l'au moins un dispositif de regroupement d'articles (19, 19a, 19b) et
- une machine d'emballage (23) pour l'emballage de l'empilement d'articles (24) sécurisé dans un emballage d'expédition, cette machine d'emballage (23) étant reliée, par l'intermédiaire d'un système de convoyage d'expédition (20), avec l'au moins un dispositif de regroupement d'articles (19, 19a, 19b), ce système de convoyage d'expédition (20) permettant de transporter l'empilement d'articles (24) sécurisé de l'au moins un dispositif de regroupement d'articles (19, 19a, 19b) vers la machine d'emballage (23), dans lequel le système de convoyage d'expédition (20) se raccorde au deuxième système de convoyage (31) de l'au moins un dispositif de regroupement d'articles (19, 19a, 19b).

2. Système de stockage et de préparation de commandes (1) selon la revendication 1, **caractérisé en ce que** le guidage de bande (28) comprend des premières parties de cadre (32a, 32b) dépassant du fond de dépôt de banderolage (26) et une deuxième partie de cadre (33a, 33b) reliant celles-ci, dans lequel le plan de guidage de bande (B) s'étend entre les premières parties de cadre (32a, 32b) et la deuxième partie de cadre (33a, 33b) et **en ce que** le guidage de bande (28) est réalisé sur les premières parties de cadre (32a, 32b) et la deuxième partie de cadre (33a, 33b).

3. Système de stockage et de préparation de commandes (1) selon la revendication 1 ou 2, **caractérisé en ce que** le fond de dépôt de banderolage (26) comprend des tables de dépôt (34a, 34b) disposées des deux côtés du plan de guidage de bande (B) et en face les unes des autres, qui sont intégrées dans le premier système de convoyage (29) et le deuxième système de convoyage (31).

4. Système de stockage et de préparation de commandes (1) selon la revendication 1 ou 2, **caractérisé en ce que** le fond de dépôt de banderolage (26) comprend des dispositifs de convoyage de banderolage disposés des deux côtés du plan de guidage de bande (B) et en face les uns des autres, qui sont intégrés dans le premier système de convoyage (29) et le deuxième système de convoyage (31).

5. Système de stockage et de préparation de commandes (1) selon l'une des revendications 1 à 4, **caractérisé en ce que** la première direction de convoyage (F1) des articles (10a... 101) sur le premier système de convoyage (29) correspond à la deuxième direction de convoyage (F2) de l'empilement d'articles (24) sécurisé sur le deuxième système de convoyage (31).

6. Système de stockage et de préparation de commandes (1) selon l'une des revendications 1 à 5, **caractérisé en ce que** le plan de guidage de bande (B) est incliné, par rapport à une verticale (z) d'un premier angle d'inclinaison (α) par rapport au premier système de convoyage (29) de sorte qu'une droite d'intersection inférieure (g1) entre le plan de guidage de bande (B) et le plan de dépôt (A) et une droite d'intersection supérieure (g2) entre le plan de guidage de bande (B) et le plan de distribution (C) sont disposées avec une distance horizontale (a), dans lequel la droite d'intersection inférieure (g1) est en retrait par rapport à la droite d'intersection supérieure (g2).

7. Système de stockage et de préparation de commandes (1) selon la revendication 6, **caractérisé en ce que** la droite d'intersection inférieure (g1) s'étend entre les premières parties de cadre (32a, 32b) du guidage de bande (28).

8. Système de stockage et de préparation de commandes (1) selon l'une des revendications 1 à 7, **caractérisé en ce que** le fond de dépôt de banderolage (26) est incliné d'un deuxième angle d'inclinaison (β) par rapport à un plan horizontal (x/y) de sorte qu'une extrémité adjacente au premier système de convoyage (29) est plus haute qu'une extrémité (E) distante du premier système de convoyage (29).

9. Système de stockage et de préparation de commandes (1) selon l'une des revendications 1 à 8, **caractérisé en ce que** le plan de distribution (C) est incliné d'un troisième angle d'inclinaison (γ) par rapport à un plan horizontal (x/y) de sorte qu'une extrémité distante de la machine de banderolage (27) est plus haute qu'une extrémité (D) adjacente à la machine de banderolage (27).

10. Système de stockage et de préparation de commandes (1) selon l'une des revendications 1 à 9, **caractérisé en ce que** le dispositif de regroupement d'articles (19, 19a, 19b) comprend une butée d'empilement (37) disposée au niveau du fond de dépôt de banderolage (26), après le plan de guidage de bande (B) dans la deuxième direction de convoyage (F2) du deuxième système de convoyage (31), qui, grâce à au moins un dispositif d'entraînement (38), peut être déplacé entre une position libre en retrait du trajet de transport et une position d'empilement dépassant sur le trajet de transport, dans lequel le deuxième système de convoyage (31) constitue le trajet de transport le long duquel l'empilement d'articles (24) sécurisé est transporté.

11. Système de stockage et de préparation de commandes (1) selon l'une des revendications 6 à 10, **caractérisé en ce que** le dispositif de convoyage (30) du premier système de convoyage (29) comprend un dispositif de dépôt d'articles (41) avec un fond de dépôt de dispositif de distribution d'articles (42) et une ouverture de fond de dispositif de dépôt d'articles (43) pouvant être fermée avec celui-ci, dans lequel une ligne verticale (v) à l'extrémité aval (D) de l'ouverture de fond de dispositif de dépôt d'articles (43) conduisant à travers le plan de guidage de bande (B) avant qu'elle ne rencontre le fond de dépôt de banderolage (26).

12. Système de stockage et de préparation de commandes (1) selon la revendication 11, **caractérisé en ce que** le fond de dépôt de dispositif de distribution d'articles (42) est logé de manière rotative autour d'un axe perpendiculaire au fond de dépôt de dispositif de distribution d'articles (42) au niveau d'un cadre (39) du dispositif de regroupement d'articles (19, 19a, 19b).

13. Système de stockage et de préparation de commandes (1) selon la revendication 11 ou 12, **caractérisé en ce qu'**une caméra (44) est disposée au-dessus du fond de dépôt de dispositif de distribution d'articles (42).

14. Système de stockage et de préparation de commandes (1) selon l'une des revendications 11 à 13, **caractérisé en ce que** le fond de dépôt de dispositif de distribution d'articles (42) peut être déplacé par au moins un dispositif d'entraînement entre une position libre en retrait par rapport à l'ouverture de fond de dispositif de dépôt d'articles (43) et une position de prise en charge fermant l'ouverture de fond de dispositif de dépôt d'articles (43) et **en ce que** le fond de dépôt de dispositif de distribution d'articles (42) définit, dans la position de prise en charge, le plan de distribution (C).

15. Système de stockage et de préparation de commandes (1) selon l'une des revendications 11 à 14, **caractérisé en ce que** le premier système de convoyage (29) comprend, en outre, un dispositif de convoyage d'alimentation (35b) disposé, dans la première direction de convoyage (F1), en amont du dispositif de distribution d'articles (41), qui comprend une goulotte (36b) ou un système de convoyage entraîné, dont l'extrémité aval (G) est disposée à distance, dans la direction verticale (z), du fond de dépôt de dispositif de distribution d'articles (42) déplacé dans la position de prise en charge et au-dessus de celui-ci.

16. Système de stockage et de préparation de commandes (1) selon l'une des revendications 1 à 10, **caractérisé en ce que**
- le premier système de convoyage (29) comprend un dispositif de convoyage d'alimentation (35a) qui comprend une goulotte (36a) ou un système de convoyage entraîné,
- l'extrémité aval (D) du dispositif de convoyage d'alimentation (35a) est distant, aussi bien verticalement qu'horizontalement, de la droite d'intersection inférieure (g1) entre le plan de guidage de bande (B) et le plan de dépôt (A) et
- il existe au moins une parabole (p) qui conduit de l'extrémité aval (D) du dispositif de convoyage d'alimentation (35a) à travers le plan de guidage de bande (B) vers le fond de dépôt de banderolage (26) et dont la tangente au point de départ coïncide avec le plan de distribution (C) du dispositif de convoyage d'alimentation (35a).

17. Système de stockage et de préparation de commandes (1) selon l'une des revendications 6 à 16, **caractérisé en ce que**
- le premier angle d'inclinaison (α) est de l'ordre de 15-40° et/ou
- le deuxième angle d'inclinaison (β) est de l'ordre de 15-40° et/ou
- le troisième angle d'inclinaison (γ) est de l'ordre de 15-40°.

18. Système de stockage et de préparation de commandes (1) selon l'une des revendications 15 à 17, **caractérisé en ce que** le dispositif de convoyage d'alimentation (35a, 35b) est incliné de 30° à 50° par rapport à un plan horizontal (x/y) de sorte qu'une extrémité distante de la machine de banderolage (27) est plus haute que l'extrémité adjacente à la machine de banderolage (27).

19. Système de stockage et de préparation de commandes (1) selon la revendication 1, **caractérisé en ce que** les moyens de chargement (13, 13a... 13c) sont constitués de récipients de convoyage et **en ce que** le système de convoyage d'alimentation (17) comprend un dispositif de convoyage suspendu pour le transport suspendu des récipients de convoyage (13, 13a... 13c) et au moins une station de déchargement (40) pour le déchargement des récipients de convoyage (13, 13a... 13c), dans lequel la station de déchargement (40) est raccordée, en amont du premier système de convoyage (29), à l'au moins un dispositif de regroupement d'articles (19, 19a, 19b).

20. Système de stockage et de préparation de commandes (1) selon la revendication 19, **caractérisé en ce que** le dispositif de convoyage suspendu comprend, pour le transport du récipient de convoyage (13, 13a... 13c) vers la station de déchargement (40) et pour le transport du récipient de convoyage (13, 13a... 13c) hors de la station de déchargement (40), un support de transport (45) pouvant être déplacé par un dispositif d'entraînement ou par la force de gravité, dans lequel le récipient de convoyage (13, 13a... 13c) est couplé de manière articulée avec le support de transport (45) par l'intermédiaire d'un support suspendu (46), le support suspendu (46) pouvant pivoter autour d'un axe s'étendant globalement parallèlement au dispositif de convoyage suspendu par rapport au support de transport (45).

21. Procédé d'empilage d'articles (10a... 101) et pour la sécurisation des articles (10a... 101) empilés avec une bande (25) enroulée autour de l'empilement d'articles (24) dans un dispositif de regroupement d'articles (19, 19a, 19b), ces articles (10a... 101) étant transportés auparavant avec des moyens de chargement (11a... 11c, 13, 13a... 13c) vers le dispositif de regroupement d'articles (19, 19a, 19b) avec un système de convoyage d'alimentation (17) disposé entre la zone de stockage (5, 6) et le dispositif de regroupement d'articles (19, 19a, 19b), comprenant les étapes suivantes
a) transport des articles (10a... 101) pour la formation d'un empilement d'articles (24) avec un premier système de convoyage (29), qui est disposé, dans une première direction de convoyage (F1), avant une machine de banderolage (27) et qui comprend un dispositif de convoyage (30) grâce auquel les articles (10a... 101) sont distribués sur un fond de dépôt de banderolage (26), dans lequel un article (10a... 101) distribué par le dispositif de convoyage (30) est déplacé au moins à certains endroits sans soutien par en dessous vers le fond de dépôt de banderolage (26) et le déplacement présente une composante verticale orientée vers le bas et dans lequel la machine de banderolage (27) comprend un guidage de bande (28) qui guide la bande (25) autour de l'empilement d'articles (24) et définit un plan de guidage de bande (B),
b) empilage de ces articles (10a... 101) afin de former un empilement d'articles (24) sur un plan de dépôt (A) du fond de dépôt de banderolage (26), dans lequel le plan de dépôt (A) coupe le plan de guidage de bande (B) le long d'une droite d'intersection inférieure (g1) et les articles (10a... 101), sont empilés sur cette droite d'intersection inférieure (g1),
c) application d'une bande (25) autour de cet empilement d'articles (24) avec la machine de banderolage (27),
d) évacuation de l'empilement sécurisé avec la bande (25) par l'intermédiaire d'un deuxième système de convoyage (31) disposé, dans une deuxième direction de convoyage (F2), après la machine de banderolage (27) et
e) transport d'un empilement d'articles (24) sécurisé du dispositif de regroupement d'articles (19, 19a, 19b) vers une machine d'emballage (23) pour l'emballage de l'empilement d'articles (24) sécurisé afin d'obtenir un emballage d'expédition, cette machine d'emballage (23) étant reliée, par l'intermédiaire d'un système de convoyage d'expédition (20), avec le dispositif de regroupement d'articles (19, 19a, 19b), ce système de convoyage d'expédition (20) se raccordant au deuxième système de convoyage (31) du dispositif de regroupement d'articles (19, 19a, 19b).

22. Procédé selon la revendication 21, **caractérisé en ce que** les étapes a) et b) comprennent
i) le transport d'au moins un article (10a... 101) par l'intermédiaire d'un dispositif de convoyage d'alimentation intégré dans le premier système de convoyage (29), qui comprend une goulotte (36b) ou un dispositif de convoyage entraîné, et la distribution de l'au moins un article (10a... 101) sur un fond de dépôt de dispositif de distribution d'articles (42) d'un dispositif de distribution d'articles (41), qui est intégré dans le dispositif de convoyage du premier système de convoyage (29) et qui se trouve dans une position de prise en charge, dans lequel le fond de dépôt de dispositif de distribution d'articles (42)
- est déplacé vers une position de prise en charge fermant l'ouverture de fond du dispositif de distribution d'articles (43) lorsqu'un article (10a... 101) ou plusieurs articles (10a... 101) doivent être pris en charge sur le fond de dépôt de dispositif de distribution d'articles (42) et
- est déplacé vers une position libre en retrait par rapport à l'ouverture de fond du dispositif de distribution d'articles (43) lorsqu'un article (10a... 101) ou plusieurs articles (10a... 101) doivent être distribués par le fond de dépôt de dispositif de distribution d'articles (42)
ii) déplacement du fond de dépôt de dispositif de distribution d'articles (42) vers la position libre en retrait lorsqu'un article (10a... 101) ou plusieurs articles (10a... 101) ont été distribués sur le fond de dépôt de dispositif de distribution d'articles (42), afin de laisser tomber cet ou ces articles (10a... 101) sur le fond de dépôt de banderolage (26) et
iii) répétition des étapes i) et ii) tant que l'empilement d'articles (24) formé sur le fond de dépôt de banderolage (26) est incomplet.

23. Procédé selon la revendication 22, **caractérisé en ce que** les articles (10a... 101) distribués par le dispositif de distribution d'articles (41) tombent verticalement à travers le plan de guidage de bande (B) avant d'atteindre le fond de dépôt de banderolage (26).

24. Procédé selon la revendication 22 ou 23, **caractérisé en ce qu'**une orientation de l'article (10a... 101) sur le fond de dépôt du dispositif de distribution d'articles (42) est déterminée, entre les étapes i) et ii) à l'aide d'une caméra (44) disposée au-dessus du fond de dépôt du dispositif de distribution d'articles (42) et est corrigée par la rotation du fond de dépôt du dispositif de distribution d'articles (42) autour d'un axe perpendiculaire au fond de dépôt du dispositif de distribution d'articles (42) lorsque l'orientation effective de l'article (10a... 101) ne correspond pas à une orientation de consigne de l'article (10a... 101).

25. Procédé selon la revendication 21, **caractérisé en ce que** l'étape a) comprend
- le transport par l'intermédiaire d'un dispositif de convoyage d'alimentation (35a, 35b) intégré dans le premier système de convoyage (29), qui comprend une goulotte (36a, 36b) ou un dispositif de convoyage entraîné et
- la distribution de l'article (10a... 101) avec une vitesse qui présente une composante horizontale, dans lequel une parabole (p) décrite par l'article (10a... 101) conduit à travers le plan de guidage de bande (B) avant de se terminer sur le fond de dépôt de banderolage (26).

26. Procédé selon l'une des revendications 21 à 25, **caractérisé en ce que** les articles (10a... 101) comprennent des articles (10a... 101) avec une faible résistance à la flexion et des articles (10a... 101) avec une grande résistance à la flexion et **en ce que**, à l'étape b), les articles (10a... 101) sont distribués en fonction de leur résistance à la flexion sur l'empilement d'articles (24), dans lequel les articles (10a... 101) avec une grande résistance à la flexion sont disposés en dessous dans l'empilement d'articles (24).

27. Procédé selon l'une des revendications 21 à 26, **caractérisé en ce que**, avant l'étape b) une base est disposée sur le fond de dépôt de banderolage (26), sur laquelle les articles (10a... 101) sont empilés et qui est également entourée par la bande (25).

28. Procédé selon l'une des revendications 21 à 27, **caractérisé en ce que**, après l'étape b), un document d'expédition est disposé sur l'empilement d'articles (24), autour duquel la bande (25) est également enroulée.

29. Procédé selon l'une des revendications 21 à 28, **caractérisé en ce qu'**une butée d'empilement (37) disposée au niveau du fond de dépôt de banderolage (26), dans la deuxième direction de convoyage (F2) du deuxième système de convoyage (31), après le plan de guidage de bande (B), est mise à disposition et **en ce que** le deuxième système de convoyage (31) constitue un trajet de transport le long duquel l'empilement d'articles (24) sécurisé est transporté et **en ce que** la butée d'empilement (37) est déplacée, avant l'étape b), vers une position d'empilage dépassant dans le trajet de transport des articles (10a... 101) et, avec l'étape d), vers une position libre en retrait par rapport au trajet de transport.

30. Procédé selon la revendication 29, **caractérisé en ce que**
- la butée d'empilement (37) est orientée perpendiculairement par rapport au fond de dépôt de banderolage (26) lorsque, à l'étape b), des articles (10a... 101) de tailles globalement identiques sont empilés sur le fond de dépôt de banderolage (26) et/ou
- la butée d'empilement (37) est orientée de manière oblique par rapport au fond de dépôt de banderolage (26) lorsque, à l'étape b), des articles (10a... 101) de tailles globalement différentes et triés en fonction de leurs tailles sont empilés, dans lequel les articles (10a... 101) les plus grands sont disposés en bas de l'empilement d'articles (24) et les articles (10a... 101) les plus petits sont disposés en haut de l'empilement d'articles (24).
